# EUROPEAN PATENT SPECIFICATION

(11) **EP 2 506 355 B1**
(45) Date of publication and mention of the grant of the patent: **21.06.2017**
(21) Application number: 11848681.0
(22) Date of filing: 12.12.2011
(51) Int. Cl.: H01M 8/0432, H01M 8/0438, H01M 8/0444, H01M 8/04664, H01M 8/04955, H01M 8/2475, H01M 8/0612

(54) **POWER GENERATION SYSTEM AND OPERATING METHOD THEREFOR**
STROMERZEUGUNGSSYSTEM UND BETRIEBSVERFAHREN DAFÜR
SYSTÈME DE GÉNÉRATION DE PUISSANCE, ET PROCÉDÉ DE FONCTIONNEMENT ASSOCIÉ

(30) Priority: 13.12.2010 JP 2010276952; 08.12.2011 JP 2011268916
(43) Date of publication of application: 03.10.2012
(73) Proprietor: Panasonic Corporation, Osaka 571-8501 (JP)
(72) Inventor: TATSUI, Hiroshi, Osaka-shi, Osaka 540- 6207 (JP); MORITA, Junji, Osaka-shi, Osaka 540 - 6207 (JP); YASUDA, Shigeki, Osaka-shi, Osaka 540- 6207 (JP); YUKIMASA, Akinori, Osaka-shi, Osaka 540 - 6207 (JP); INOUE, Atsutaka, Osaka-shi, Osaka 540 - 6207 (JP)
(74) Representative: Grünecker Patent- und Rechtsanwälte PartG mbB
(86) International application number: PCT/JP2011/006920
(87) International publication number: WO 2012/081220

(56) References cited:
- EP-A1- 2 053 680
- WO-A1-2005/041333
- JP-A- 2003 229 148
- JP-A- 2005 093 430
- JP-A- 2006 244 822
- JP-A- 2006 253 020
- JP-A- 2007 280 671
- JP-A- 2008 210 631
- JP-A- 2008 262 849
- JP-A- 2009 115 400
- JP-A- 2009 117 191
- JP-A- 2009 205 825
- US-A1- 2010 221 623

## Description

### Technical Field

The present invention relates to a power generation system configured to supply heat and electricity and an operation method thereof The present invention particularly relates to the structure of the power generation system.

### Background Art

A co-generation system is a system configured to: generate and supply electric power to a consumer, thereby providing a power load to the consumer; and recover and store exhaust heat that is generated when generating the electric power, thereby providing a hot water load to the consumer. As one of such co-generation systems, there is a know co-generation system in which a fuel cell and a water heater are operated by using the same fuel (see Patent Literature 1, for example). Patent Literature 1 discloses a co-generation system which includes: a fuel cell; a heat exchanger configured to recover heat that is generated when the fuel cell operates; a hot water tank configured to store water that is heated while the water circulates through the heat exchanger; and a water heater having a function of heating the water that flows out of the hot water tank to a predetermined temperature. The fuel cell and the water heater are configured to operate by using the same fuel.

Moreover, there is a known fuel cell power generator that is intended to realize its easy indoor installation and to simplify supply and exhaust ducts (see Patent Literature 2, for example). The fuel cell power generator disclosed in Patent Literature 3 includes an intake and exhaust apparatus with a double-pipe duct structure in which an inner pipe and an outer pipe are integrally connected, the inner pipe serving to release exhaust air to the outside and the outer pipe serving to introduce air from the outside.

Furthermore, there is a known power generator that includes a vertical duct for the purpose of improving the performance of discharging an exhaust gas generated by a fuel cell disposed inside a building (see Patent Literature 3, for example). In the power generator disclosed in Patent Literature 3, the top end of the duct which extends vertically inside the building is positioned outside the building, and the duct has a double-pipe structure. A ventilation pipe and an exhaust pipe are connected to the duct, such that each of the exhaust gas and air separately flows through a corresponding one of the inner side and the outer side of the duct.

### Citation List

### Patent Literature

PTL 1: Japanese Laid-Open Patent Application Publication No. 2007-248009
PTL 2: Japanese Laid-Open Patent Application Publication No. 2006-253020
PTL 3: Japanese Laid-Open Patent Application Publication No. 2008-210631

WO 2005/041333 A1 relates to an abnormality detecting device of a fuel cell system. US 2010/221623 A1 relates to a method and an apparatus for operation of a fuel cell arrangement having a plurality of fuel cells, said apparatus comprising a supply and exhaust mechanism including an exhaust passage configured to discharge an exhaust gas from the power generation system to the outside of the casing, and an air supply passage configured to supply air to the power generation system; a damage detector, provided in the exhaust mechanism, that is configured to detect damage to the exhaust passage; and a controller processing information received from the damage detector. JP 2009 205825 A relates to a fuel cell device.

### Summary of Invention

### Technical Problem

In each power generator disclosed in Patent Literature 2 and Patent Literature 3, if the power generator is operated when the piping (inner pipe, duct) through which the exhaust gas from the power generator is discharged becomes damaged, then it becomes difficult for the exhaust gas from the power generator, such as a flue gas generated by a burner, to be discharged to the outside of the building. Thus, there arises a problem that the exhaust gas flows reversely into an outer container accommodating the power generator. As a result of the reverse flow of the exhaust gas, the exhaust gas, which is a high-temperature gas, remains in the outer container. This causes an increase in the internal temperature of the outer container. For this reason, the temperature of accessory devices accommodated in the outer container (e.g., a controller) cannot be maintained to such a temperature as to allow them to operate normally. Thus, there is a risk that the efficiency of the accessory devices decreases.

In such a power generator as disclosed in Patent Literature 3, that is, in a power generator that is configured to discharge an exhaust gas generated by a fuel cell to the outside of a building through an exhaust gas duct and is configured to be supplied with air indoors, if the power generator is operated when the exhaust gas duct is damaged, then it becomes difficult for the exhaust gas from the power generator, such as a flue gas generated by a burner, to be discharged to the outside of the building. Thus, there arises a problem that exhaust gas leakage occurs indoors. As a result, there is a risk that the indoor temperature increases.

The present invention has been made in view of the above problems. A first object of the present invention is to provide a power generation system and its operation method, which are capable of suppressing an increase in the internal temperature of a casing and thereby suppressing a decrease in the efficiency of accessory devices accommodated in the casing, by stopping the operation of the power generation system when an exhaust passage through which an exhaust gas discharged from the power generation system flows becomes damaged. A second object of the present invention is to provide a power generation system including an indoor exhaust passage and its operation method, which are capable of suppressing exhaust gas leakage indoors in a case, for example, where an exhaust passage becomes damaged.

### Solution to Problem

In order to solve the above-described conventional problems, a power generation system according to the present invention as defined in claim 1 a fuel cell system including a fuel cell configured to generate electric power by using a fuel gas and an oxidizing gas, and the power generation system further includes: a casing accommodating the fuel cell; a supply and exhaust mechanism including an exhaust passage configured to discharge an exhaust gas from the power generation system to outside of the casing, and an air supply passage configured to supply air to the power generation system; a damage detector, provided in at least one of the air supply passage or the casing, configured to detect damage to the exhaust passage; and a controller . If the controller detects damage to the exhaust passage based on information obtained from the damage detector, the controller performs control to stop operation of the power generation system.

Here, to "stop operation of the power generation system" refers not only to stopping the currently operating power generation system but also to prohibiting the power generation system from starting operating. Moreover, prohibiting the power generation system from operating does not mean it is necessary to prohibit the operation of all of the component devices of the power generation system, but means prohibiting the operation of some of the component devices of the power generation system so that the operational advantages of the present invention can be exerted.

Accordingly, in a case, for example, where the exhaust passage becomes damaged, an increase in the internal temperature of the casing is suppressed and thereby a decrease in the efficiency of accessory devices accommodated in the casing can be suppressed. Moreover, in a case where the exhaust passage is disposed indoors and the exhaust passage becomes damaged, exhaust gas leakage indoors from the power generation system can be suppressed.

Further, in the power generation system according to the present invention, the damage detector detects presence of at least one of the following phenomena: a change in pressure; a change in temperature; a change in gas composition; and detection of a combustible gas.

Still further, in the power generation system according to the present invention, the fuel cell system may further include a hydrogen generation apparatus including: a reformer configured to generate a hydrogen-containing fuel gas from a raw material and water; and a combustor configured to heat the reformer.

Still further, in the power generation system according to the present invention, if the controller detects damage to the exhaust passage because the fuel cell system is in operation, the controller may stop the operation of the fuel cell system.

Still further, the power generation system according to the present invention may further include a combustion apparatus disposed outside the casing, and the exhaust passage may branch off into at least two passages such that upstream ends thereof are connected to the combustion apparatus and the fuel cell system, respectively.

Still further, in the power generation system according to the present invention, if the controller detects damage to the exhaust passage because the combustion apparatus is in operation, the controller may stop the operation of the combustion apparatus.

Still further, in the power generation system according to the present invention, the damage detector is configured as an oxygen concentration detector, and the controller may determine that the exhaust passage is damaged either: in a case where the oxygen concentration detector is provided in the casing or at the air supply passage and an oxygen concentration detected by the oxygen concentration detector is lower than a preset first oxygen concentration; or in a case where the oxygen concentration detector is provided at the exhaust passage and an oxygen concentration detected by the oxygen concentration detector is lower than a preset second oxygen concentration, and in a case where the oxygen concentration detector is provided at the exhaust passage and an oxygen concentration detected by the oxygen concentration detector is higher than a third oxygen concentration which is higher than the second oxygen concentration.

Still further, in the power generation system according to the present invention, the damage detector is configured as a carbon dioxide concentration detector, and the controller may determine that the exhaust passage is damaged either: in a case where the carbon dioxide concentration detector is provided in the casing or at the air supply passage and a carbon dioxide concentration detected by the carbon dioxide concentration detector is higher than a preset first carbon dioxide concentration; or in a case where the carbon dioxide concentration detector is provided at the exhaust passage and a carbon dioxide concentration detected by the carbon dioxide concentration detector is lower than a preset second carbon dioxide concentration, and in a case where the carbon dioxide concentration detector is provided at the exhaust passage and a carbon dioxide concentration detected by the carbon dioxide concentration detector is higher than a third carbon dioxide concentration which is higher than the second carbon dioxide concentration.

Still further, in the power generation system according to the present invention, the damage detector is configured as a carbon monoxide concentration detector, and the controller may determine that the exhaust passage is damaged if a carbon monoxide concentration detected by the carbon monoxide concentration detector is higher than or equal to a preset first carbon monoxide concentration.

Still further, the power generation system according to the present invention may further include: a combustion apparatus disposed outside the casing; and a ventilator configured to ventilate an interior of the casing by discharging air in the interior of the casing to the exhaust passage. The damage detector may be configured as a gas concentration detector detecting at least one gas concentration between a carbon monoxide concentration and a carbon dioxide concentration. The controller may: store, as a reference gas concentration, a gas concentration that is obtained by adding a predetermined concentration to a gas concentration detected by the gas concentration detector when the fuel cell system is not generating electric power, the combustor and the combustion apparatus are not performing combustion, and the ventilator is operating; and determine that the exhaust passage is damaged if the gas concentration detector detects a gas concentration that is out of a concentration range of the reference gas concentration.

Still further, the power generation system according to the present invention may further include: a combustion apparatus disposed outside the casing; and a ventilator configured to ventilate an interior of the casing by discharging air in the interior of the casing to the exhaust passage. The damage detector may be configured as an oxygen concentration detector. The controller may: store, as a reference oxygen concentration, an oxygen concentration that is obtained by subtracting a predetermined concentration from an oxygen concentration detected by the oxygen concentration detector when the fuel cell system is not generating electric power, the combustor and the combustion apparatus are not performing combustion, and the ventilator is operating; and determine that the exhaust passage is damaged if the oxygen concentration detector detects an oxygen concentration that is out of a concentration range of the reference oxygen concentration.

Still further, in the power generation system according to the present invention, a downstream end of the air supply passage may be either connected to an air inlet of the casing or open to an interior of the casing, and the damage detector may be provided near the downstream end of the air supply passage.

Still further, in the power generation system according to the present invention, the hydrogen generation apparatus may further include: a combustion air feed passage whose upstream end is open to an interior of the casing and positioned near a downstream end of the air supply passage and whose downstream end is connected to the combustor; and a combustion air feeder provided at the combustion air feed passage. The damage detector may be provided at the combustion air feed passage.

Still further, in the power generation system according to the present invention, the damage detector is configured as a temperature detector, and the controller may determine that the exhaust passage is damaged if a temperature detected by the temperature detector is higher than a preset first temperature or lower than a second temperature which is lower than the first temperature.

Still further, the damage detector may be configured as a pressure detector provided in at least one of the exhaust passage and the air supply passage, and the controller may determine that the exhaust passage is damaged if the pressure detector detects a pressure higher than a preset first pressure or detects a pressure lower than a second pressure which is lower than the first pressure.

Still further, in the power generation system according to the present invention, the controller may perform control to stop the operation of the power generation system and to prohibit start-up of the power generation system.

Still further, in the power generation system according to the present invention, the air supply passage is formed in such a manner that the air supply passage is heat exchangeable with the exhaust passage.

A power generation system operation method according to the present invention is defined in claim 15.

Accordingly, in a case, for example, where the exhaust passage becomes damaged, an increase in the internal temperature of the casing is suppressed and thereby a decrease in the efficiency of accessory devices accommodated in the casing can be suppressed. Moreover, in a case where the exhaust passage is disposed indoors and the exhaust passage becomes damaged, exhaust gas leakage indoors from the power generation system can be suppressed.

### Advantageous Effects of Invention

According to the power generation system and its operation method of the present invention, in a case, for example, where the exhaust passage becomes damaged, an increase in the internal temperature of the casing is suppressed and thereby a decrease in the efficiency of accessory devices accommodated in the casing can be suppressed. Moreover, in a case where the exhaust passage is disposed indoors and the exhaust passage becomes damaged, exhaust gas leakage indoors from the power generation system can be suppressed.

### Brief Description of Drawings

[Fig. 1] Fig. 1 is a schematic diagram showing a schematic configuration of a power generation system according to Embodiment 1 of the present invention.
[Fig. 2] Fig. 2 is a flowchart schematically showing a damage detection operation of the power generation system according to Embodiment 1.
[Fig. 3] Fig. 3 is a schematic diagram showing a schematic configuration of a power generation system according to Variation 1 of Embodiment 1.
[Fig. 4] Fig. 4 is a schematic diagram showing a schematic configuration of a power generation system according to Embodiment 2 of the present invention.
[Fig. 5] Fig. 5 is a schematic diagram showing a schematic configuration of a power generation system according to Variation 1 of Embodiment 2.
[Fig. 6] Fig. 6 is a flowchart schematically showing a damage detection operation of the power generation system according to Variation 1 of Embodiment 2.
[Fig. 7] Fig. 7 is a schematic diagram showing a schematic configuration of a power generation system according to Variation 2 of Embodiment 2.
[Fig. 8] Fig. 8 is a flowchart schematically showing a damage detection operation of the power generation system according to Variation 2 of Embodiment 2.
[Fig. 9] Fig. 9 is a schematic diagram showing a schematic configuration of a power generation system according to Variation 3 of Embodiment 2.
[Fig. 10] Fig. 10 is a flowchart schematically showing a damage detection operation of the power generation system according to Variation 3 of Embodiment 2.
[Fig. 11] Fig. 11 is a schematic diagram showing a schematic configuration of a power generation system according to Variation 4 of Embodiment 2.
[Fig. 12] Fig. 12 is a schematic diagram showing a schematic configuration of a power generation system according to Variation 5 of Embodiment 2.
[Fig. 13] Fig. 13 is a flowchart schematically showing a damage detection operation of the power generation system according to Variation 5 of Embodiment 2.
[Fig. 14] Fig. 14 is a schematic diagram showing a schematic configuration of a power generation system according to Variation 6 of Embodiment 2.
[Fig. 15] Fig. 15 is a flowchart schematically showing a damage detection operation of the power generation system according to Variation 6 of Embodiment 2.
[Fig. 16] Fig. 16 is a schematic diagram showing a schematic configuration of a power generation system according to Embodiment 3 of the present invention.
[Fig. 17] Fig. 17 is a flowchart schematically showing a damage detection operation of the power generation system according to Embodiment 3.
[Fig. 18] Fig. 18 is a schematic diagram showing a schematic structure of a power generation system according to Variation 1 of Embodiment 3.
[Fig. 19] Fig. 19 is a flowchart schematically showing a damage detection operation of the power generation system according to Variation 1 of Embodiment 3.
[Fig. 20] Fig. 20 is a schematic diagram showing a schematic configuration of a power generation system according to Variation 2 of Embodiment 3.
[Fig. 21] Fig. 21 is a flowchart schematically showing a damage detection operation of the power generation system according to Variation 2 of Embodiment 3.

### Description of Embodiments

Hereinafter, preferred embodiments of the present invention will be described with reference to the drawings. In the drawings, the same or corresponding components are denoted by the same reference signs, and a repetition of the same description is avoided. In the drawings, only the components necessary for describing the present invention are shown, and the other components are omitted. Further, the present invention is not limited to the embodiments described below.

(Embodiment 1)

A power generation system according to Embodiment 1 of the present invention includes: a fuel cell; a casing accommodating the fuel cell; a controller; a supply and exhaust mechanism including an exhaust passage and an air supply passage; and a damage detector. The power generation system according to Embodiment 1 serves as an example where the controller performs control to stop operation of the power generation system when the damage detector detects damage to the exhaust passage.

Here, to "stop operation of the power generation system" refers not only to stopping the currently operating power generation system but also to prohibiting the power generation system from starting operating. Moreover, prohibiting the power generation system from operating does not mean it is necessary to prohibit the operation of all of the component devices of the power generation system, but means prohibiting the operation of some of the component devices of the power generation system so that the operational advantages of the present invention can be exerted. Examples of the devices that are prohibited from operating include: a hydrogen generation apparatus configured to generate a fuel gas; a fan device configured to supply air; and a combustor, such as a burner, configured to heat the hydrogen generation apparatus. Meanwhile, devices that neither generate nor discharge a gas (e.g., a pump that causes cooling water for cooling the fuel cell to flow) are not prohibited from operating. Thus, such devices can be included in examples of devices that are allowed to operate.

### [Configuration of Power Generation System]

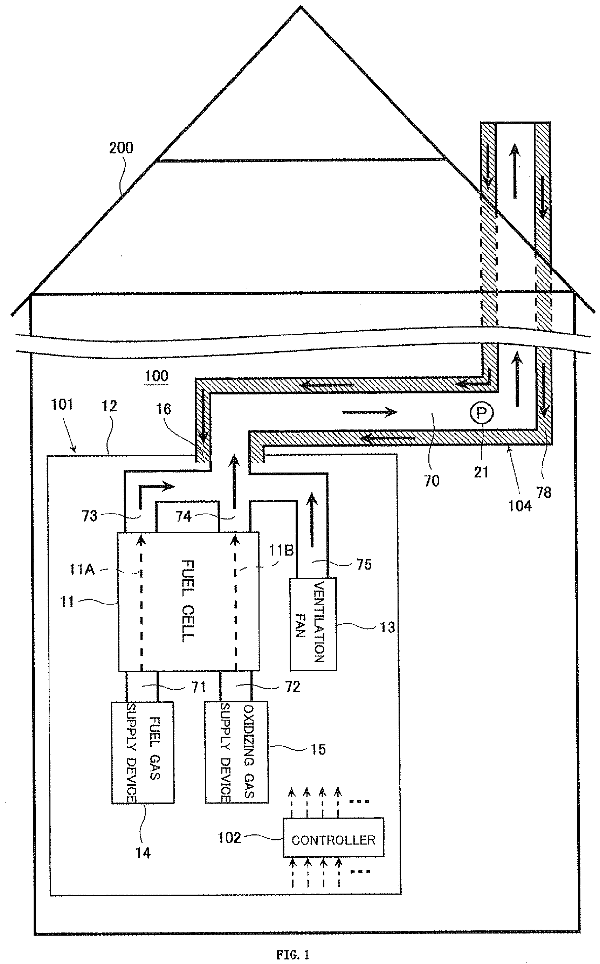

Fig. 1 is a schematic diagram showing a schematic configuration of the power generation system according to Embodiment 1 of the present invention.

As shown in Fig. 1, a power generation system 100 according to Embodiment 1 of the present invention is disposed inside a building 200. The power generation system 100 includes: a fuel cell system 101 including a fuel gas supply device 14 and a fuel cell 11; a supply and exhaust mechanism 104 including an exhaust passage 70 and an air supply passage 78; a pressure detector 21; and a controller 102. When the damage detector detects damage to the exhaust passage 70, the controller 102 performs control to prohibit the power generation system 100 from operating.

Although Embodiment 1 shows a configuration example in which the power generation system 100 is disposed inside the building 200, Embodiment 1 is not limited to this. As an alternative, the power generation system 100 may be disposed outside the building 200.

The fuel cell system 101 includes a casing 12. The fuel cell 11, a ventilation fan 13, the fuel gas supply device 14, and an oxidizing gas supply device 15 are arranged in the casing 12. Also, the controller 102 is disposed in the casing 12. Although in Embodiment 1 the controller 102 is disposed in the casing 12 of the fuel cell system 101, Embodiment 1 is not limited to this. As an alternative, the controller 102 may be disposed outside the casing 12.

A hole 16 is formed in a wall of the casing 12 at a suitable position, such that the hole 16 extends though the wall in the thickness direction of the wall. A pipe forming the exhaust passage 70 and a pipe forming the air supply passage 78 (i.e., a double pipe) are connected to the hole 16. It should be noted that the pipe forming the exhaust passage 70 is disposed inside the pipe forming the air supply passage 78. Accordingly, when an exhaust gas from the fuel cell system 101 is discharged to the exhaust passage 70, a gas in the air supply passage 78 is heated due to heat transferred from the exhaust gas.

Although in Embodiment 1 the exhaust passage 70 and the air supply passage 78 form a double pipe, the passage formation is not limited to this. These passages may be in any form, so long as the air supply passage 78 and the exhaust passage 70 are provided in such a manner as to allow them to exchange heat with each other. Here, passage formations where "the air supply passage 78 and the exhaust passage 70 are provided in such a manner as to allow them to exchange heat with each other" do not necessarily require the air supply passage 78 and the exhaust passage 70 to be in contact with each other, but include a formation where the air supply passage 78 and the exhaust passage 70 are spaced apart to such a degree as to allow a gas in the air supply passage 78 and a gas in the exhaust passage 70 to exchange heat with each other. Thus, the air supply passage 78 and the exhaust passage 70 may be arranged with space therebetween. Moreover, one of the passages may be formed inside the other passage. As one example, a wall may be formed inside one pipe in a manner to extend in the extending direction of the pipe. The wall serves to divide the internal space of the pipe. One of the divided spaces of the pipe may be used as the air supply passage 78, and the other of the divided spaces of the pipe may be used as the exhaust passage 70.

The upstream end of the exhaust passage 70 is connected to the casing 12. The exhaust passage 70 is configured such that an exhaust gas discharged from the power generation system 100 flows through the exhaust passage 70. The exhaust passage 70 is formed to extend to the outside of the building 200. The downstream end (opening) of the exhaust passage 70 is open to the atmosphere. The downstream end of the air supply passage 78 is connected to the casing 12, and the upstream end (opening) of the air supply passage 78 is open to the atmosphere. The air supply passage 78 serves to supply air from the outside (here, the outside of the building 200) into the power generation system 100.

The pressure detector 21, configured to detect the flow rate of gas in the exhaust passage 70, is provided at a suitable position in the exhaust passage 70. The pressure detector 21 may be configured in any form, so long as the pressure detector 21 is configured to detect a gas pressure in the exhaust passage 70. A device used as the pressure detector 21 is not particularly limited. Although the pressure detector 21 may be provided at any position in the exhaust passage 70, it is preferred that the pressure detector 21 is provided in the upstream side portion of the exhaust passage 70 from the standpoint of facilitating the detection of damage to the exhaust passage 70.

The fuel gas supply device 14 may be configured in any form, so long as the fuel gas supply device 14 is configured to supply a fuel gas (hydrogen gas) to the fuel cell 11 while adjusting the flow rate of the fuel gas. For example, a hydrogen generation apparatus, a hydrogen canister, or a device configured to supply a hydrogen gas from a hydrogen storage alloy or the like may serve as the fuel gas supply device 14. The fuel cell 11 (to be exact, the inlet of a fuel gas passage 11A of the fuel cell 11) is connected to the fuel gas supply device 14 via a fuel gas supply passage 71.

The oxidizing gas supply device 15 may be configured in any form, so long as the oxidizing gas supply device 15 is configured to supply an oxidizing gas (air) to the fuel cell 11 while adjusting the flow rate of the oxidizing gas. For example, the oxidizing gas supply device 15 may be configured as a fan device such as a fan or a blower. The fuel cell 11 (to be exact, the inlet of an oxidizing gas passage 11 B of the fuel cell 11) is connected to the oxidizing gas supply device 15 via an oxidizing gas supply passage 72.

The fuel cell 11 includes an anode and a cathode (which are not shown). In the fuel cell 11, the fuel gas that is supplied to the fuel gas passage 11A is supplied to the anode while passing through the fuel gas passage 11 A. Similarly, the oxidizing gas that is supplied to the oxidizing gas passage 11B is supplied to the cathode while passing though the oxidizing gas passage 11 B. Then, the fuel gas supplied to the anode and the oxidizing gas supplied to the cathode react with each other, and as a result, electricity and heat are generated

It should be noted that the generated electricity is supplied to an external electrical load (e.g., a household electrical appliance) by means of a power conditioner which is not shown. Also, the generated heat is recovered by a heating medium flowing through a heating medium passage which is not shown. The heat recovered by the heating medium can be used for heating water, for example.

In Embodiment 1, various fuel cells including a polymer electrolyte fuel cell and a solid oxide fuel cell are usable as the fuel cell 11. Although in Embodiment 1 the fuel cell 11 and the fuel gas supply device 14 are configured as separate components, Embodiment 1 is not limited to this. Similar to a solid oxide fuel cell, the fuel gas supply device 14 and the fuel cell 11 may be integrated. In this case, the fuel cell 11 and the fuel gas supply device 14 are covered with a common heat insulating material and configured as a single unit, and a combustor 14b described below can heat not only a reformer 14a described below but also the fuel cell 11.

In a case where the fuel cell 11 is a direct internal reforming type solid oxide fuel cell, the anode of the fuel cell 11 and the reformer 14a may be integrated since the anode of the fuel cell 11 also acts as the reformer 14a. Since the fuel cell 11 is configured in the same manner as that of a general fuel cell, a detailed description of the configuration of the fuel cell 11 is omitted.

The upstream end of an off fuel gas passage 73 is connected to the outlet of the fuel gas passage 11A. The downstream end of the off fuel gas passage 73 is connected to the exhaust passage 70. The upstream end of an off oxidizing gas passage 74 is connected to the outlet of the oxidizing gas passage 11B. The downstream end of the off oxidizing gas passage 74 is connected to the exhaust passage 70.

Accordingly, the fuel gas that is unused in the fuel cell 11 (hereinafter, off fuel gas) is discharged from the outlet of the fuel gas passage 11 A to the exhaust passage 70 through the off fuel gas passage 73. Similarly, the oxidizing gas that is unused in the fuel cell 11 (hereinafter, off oxidizing gas) is discharged from the outlet of the oxidizing gas passage 11 B to the exhaust passage 70 through the off oxidizing gas passage 74. The off fuel gas discharged to the exhaust passage 70 is diluted with the off oxidizing gas and discharged to the outside of the building 200.

The ventilation fan 13 is connected to the exhaust passage 70 via a ventilation passage 75. The ventilation fan 13 may be configured in any form, so long as the ventilation fan 13 is configured to ventilate the interior of the casing 12. Accordingly, when the ventilation fan 13 is operated while air is supplied from the outside of the power generation system 100 into the casing 12 through the air inlet 16, the gas in the casing 12 (mainly air) is discharged to the outside of the building 200 through the ventilation passage 75 and the exhaust passage 70. In this manner, the interior of the casing 12 is ventilated.

Although in Embodiment 1 a fan is used as the ventilator, the ventilator is not limited to a fan, but may be a blower. Although the ventilation fan 13 is disposed in the casing 12, Embodiment 1 is not limited to this. The ventilation fan 13 may be disposed in the exhaust passage 70.

As described above, in Embodiment 1, the off fuel gas, the off oxidizing gas, and the gas in the casing 12 that is discharged when the ventilation fan 13 is operated, are shown as examples of the exhaust gas discharged from the power generation system 100. It should be noted that the exhaust gas discharged from the power generation system 100 is not limited to these examples of gas. In a case where the fuel gas supply device 14 is configured as a hydrogen generation apparatus, examples of the exhaust gas discharged from the power generation system 100 may include gases discharged from the hydrogen generation apparatus (e.g., a flue gas and a hydrogen-containing gas).

The controller 102 may be configured as any device, so long as the device is configured to control component devices of the power generation system 100. The controller 102 includes an arithmetic processing unit, such as a microprocessor or a CPU, and a storage unit configured as, for example, a memory storing programs for executing control operations. Through the loading and execution, by the arithmetic processing unit, of a predetermined control program stored in the storage unit, the controller 102 performs various controls of the power generation system 100.

The controller 102 also includes a damage determiner (not shown). If a pressure P, detected by the pressure detector 21, of a gas flowing through the exhaust passage 70 is lower than or equal to a first pressure P1, then the damage determiner determines that the exhaust passage 70 is damaged. Thus, in Embodiment 1, the pressure detector 21 serves as the damage detector.

It should be noted that the controller 102 may be configured not only as a single controller, but as a group of multiple controllers which operate in cooperation with each other to control the power generation system 100. Moreover, the controller 102 may be configured as a microcontroller. Furthermore, the controller 102 may be configured as an MPU, PLC (Programmable Logic Controller), logic circuit, or the like. Here, the damage determiner of the controller 102 is realized by executing a predetermined program stored in the storage unit.

### [Operation of Power Generation System]

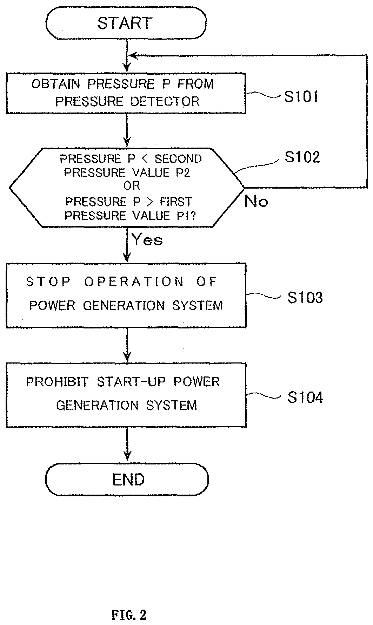

Next, operations of the power generation system 100 according to Embodiment 1 are described with reference to Fig. 1 and Fig. 2. Since a power generation operation by the fuel cell system 101 of the power generation system 100 is performed in the same manner as that of a power generation operation by a general fuel cell system, a detailed description thereof is omitted.

In Fig. 1, if the exhaust passage 70 becomes damaged at a portion that is upstream from a portion, of the exhaust passage 70, at which the pressure detector 21 is disposed, then a pressure detected by the pressure detector 21 after the occurrence of the damage to the exhaust passage 70 is expected to be lower than a pressure detected by the pressure detector 21 before the occurrence of the damage to the exhaust passage 70. Accordingly, the controller 102 can determine that the exhaust passage 70 is damaged if the pressure detected by the pressure detector 21 is lower than a second pressure, which is the lowest value in a pressure range in the exhaust passage 70 in a case where the power generation system 100 is operating and the exhaust passage 70 is not damaged.

If the exhaust passage 70 is completely divided into parts and severely damaged at a portion that is downstream from the portion, of the exhaust passage 70, at which the pressure detector 21 is disposed, then it is expected that the flow rate of the exhaust gas from the power generation system 100 increases and the pressure detected by the pressure detector 21 becomes higher than the pressure detected during normal operation. Accordingly, the controller 102 can determine that the exhaust passage 70 is damaged if the pressure detected by the pressure detector 21 is higher than a first pressure, which is the highest value in the pressure range in the exhaust passage 70 in the case where the power generation system 100 is operating and the exhaust passage 70 is not damaged.

That is, the controller 102 can determine that the exhaust passage 70 is damaged if the pressure detected by the pressure detector 21 is out of a predetermined pressure range that is set in advance. Hereinafter, a damage detection operation of the power generation system 100, which the controller 102 performs based on a pressure detected by the pressure detector 21, is described with reference to Fig. 2.

Fig. 2 is a flowchart schematically showing the damage detection operation of the power generation system according to Embodiment 1.

As shown in Fig. 2, the controller 102 (to be exact, the damage determiner of the controller 102) obtains a gas pressure P in the exhaust passage 70, which the pressure detector 21 detects while the power generation system 100 is operating (step S101). Here, "while the power generation system 100 is operating" refers to a period over which the exhaust gas from the power generation system 100 is discharged to the exhaust passage 70. In Embodiment 1, "while the power generation system 100 is operating" refers to that at least one of the fuel gas supply device 14, the oxidizing gas supply device 15, and the ventilation fan 13 is operating.

Next, the controller 102 determines whether the pressure P obtained in step S101 is higher than a first pressure value P1 (the first pressure) or lower than a second pressure value P2 (the second pressure) which is lower than the first pressure value P1, or neither (step S102).

Here, the first pressure value P1 may be set in the following manner: for example, a pressure range in the exhaust passage 70 when the exhaust gas discharged from the power generation system 100 flows through the exhaust passage 70 is obtained through an experiment or the like in advance; and then the highest pressure in the pressure range may be set as the first pressure value P 1. The pressure range detected by the pressure detector 21 varies depending on the shape (e.g., the inner diameter and length) of the exhaust passage 70. Therefore, it is preferred that a pressure range in the exhaust passage 70 in the supply and exhaust mechanism 104 with no damage is measured at the time of installation of the power generation system 100, and the highest pressure in the measured pressure range is set as the first pressure value P1.

Similarly, the second pressure value P2 may be set in the following manner: for example, the pressure range in the exhaust passage 70 when the exhaust gas discharged from the power generation system 100 flows through the exhaust passage 70 is obtained through an experiment or the like in advance; and then the lowest pressure in the pressure range may be set as the second pressure value P2. The pressure range detected by the pressure detector 21 varies depending on the shape (e.g., the inner diameter and length) of the exhaust passage 70. Therefore, it is preferred that the pressure range in the exhaust passage 70 in the supply and exhaust mechanism 104 with no damage is measured at the time of installation of the power generation system 100, and the lowest pressure in the measured pressure range is set as the second pressure value P2.

If the pressure P obtained in step S101 is neither lower than the second pressure value P2 nor higher than the first pressure value P1 (No in step S102), the controller 102 returns to step S101 and repeats step S101 and step S102 until the pressure P becomes lower than the second pressure value P2 or higher than the first pressure value P1. On the other hand, if the pressure P obtained in step S101 is lower than the second pressure value P2 or higher than the first pressure value P1 (Yes in step S102), then the controller 102 determines that the exhaust passage 70 is damaged, and proceeds to step S103.

In step S103, the controller 102 stops the operation of the power generation system 100. Accordingly, the discharging of the exhaust gas from the power generation system 100 to the exhaust passage 70 is stopped, and a reverse flow of the exhaust gas from the exhaust passage 70 into the casing 12 is suppressed.

Next, the controller 102 prohibits the start-up of the power generation system 100 (step S104). Specifically, for example, even in a case where a user of the power generation system 100 has operated a remote controller which is not shown and thereby a start-up request signal has been transmitted to the controller 102, or where a start-up time for the power generation system 100 has arrived, the controller 102 does not allow the power generation system 100 to perform a start-up process, thereby prohibiting the start-up of the power generation system 100.

As described above, in the power generation system 100 according to Embodiment 1, if the damage detector (in Embodiment 1, the pressure detector 21) detects damage to the exhaust passage 70, the controller 102 stops the operation of the power generation system 100 and prohibits the start-up of the power generation system 100. Accordingly, a reverse flow of the exhaust gas into the casing 12 is suppressed. As a result, a situation where the exhaust gas, which is a high-temperature gas, remains in the casing 12 is suppressed from occurring, and thereby an increase in the internal temperature of the casing 12 is suppressed. Therefore, a decrease in the efficiency of accessory devices (such as the controller 102) accommodated in the casing 12 can be suppressed, and the durability of the power generation system 100 can be improved.

In the power generation system 100 according to Embodiment 1, the exhaust passage 70 is disposed inside the building 200. For this reason, if the exhaust passage 70 and the air supply passage 78 become damaged, there is a risk that the exhaust gas from the power generation system 100 flows out within the building 200. However, as described above, in the power generation system 100 according to Embodiment 1, the operation of the power generation system 100 is stopped and the start-up of the power generation system 100 is prohibited, so that the outflow of the exhaust gas within the building 200 is suppressed. In this manner, an increase in the internal temperature of the building 200 can be suppressed.

Although in Embodiment 1 the controller 102 determines whether or not the exhaust passage 70 has been damaged, by determining whether or not the pressure P detected by the pressure detector 21 is lower than or equal to the first pressure value P1, Embodiment 1 is not limited to this. For example, the controller 102 may determine that the exhaust passage 70 is damaged if a difference between the pressure P detected by the pressure detector 21 before a predetermined time and the pressure P detected by the pressure detector 21 after the predetermined time is lower than or equal to a predetermined threshold pressure which is obtained from an experiment or the like in advance.

Further, in Embodiment 1, the exhaust passage 70, the off fuel gas passage 73, the off oxidizing gas passage 74, and an exhaust gas passage 77 are described as different passages. However, Embodiment 1 is not limited to this. These passages may be collectively seen as the exhaust passage 70.

Although in Embodiment 1 the pressure detector 21 is disposed in the exhaust passage 70, Embodiment 1 is not limited to this. Alternatively, the detector's sensor part may be disposed inside the exhaust passage 70 and the other parts of the detector may be disposed outside the exhaust passage 70. Moreover, the pressure detector 21 may be suitably positioned at any of the off fuel gas passage 73, the off oxidizing gas passage 74, and the ventilation passage 75, which are in communication with the exhaust passage 70.

According to the invention, the pressure detector 21 is disposed at the air supply passage 78. In this case, if the exhaust passage 70 becomes damaged, the pressure in the air supply passage 78 termed at the outer side of the exhaust passage 70 becomes higher than before the occurrence of the damage to the exhaust passage 70. Accordingly, the controller 102 (to be exact, the damage determiner of the controller 102) can determine that the exhaust passage 70 is damaged if the pressure detected by the pressure detector 21 is higher than a third pressure value P3 (the first pressure), which is the highest value in a pressure range in the air supply passage 78 in the case where the power generation system 100 is operating and the exhaust passage 70 is not damaged.

If the exhaust passage 70 is completely divided into parts and severely damaged at its middle portion, then the pressure loss in the exhaust passage 70 decreases. Accordingly, there occurs an increase in the flow rate of exhaust gas flowing to the exhaust passage 70 from devices of a supply system such as the ventilation fan 13 and the oxidizing gas supply device 15. This results in an increase in the flow rate of gas (here, air) supplied from the air supply passage 78 into the casing 12. Therefore, it is expected in this case that the pressure in the air supply passage 78 decreases as compared to before the occurrence of the damage to the exhaust passage 70.

Accordingly, the controller 102 can determine that the exhaust passage 70 is damaged if the pressure detected by the pressure detector 21 is lower than a fourth pressure value P4 (the second pressure), which is the lowest value in the pressure range in the air supply passage 78 in the case where the power generation system 100 is operating and the exhaust passage 70 is not damaged.

Specifically, while the power generation system 100 is operating with no damage to the exhaust passage 70 and the air supply passage 78, the controller 102 may measure a pressure range in the exhaust passage 70 or in the air supply passage 78. Then, the controller 102 can determine that the exhaust passage 70 is damaged if the pressure detector 21 detects a pressure value out of the pressure range.

### [Variation 1]

Next, a variation of the power generation system 100 according to Embodiment 1 is described.

A power generation system according to Variation 1 of Embodiment 1 serves as an example where the exhaust gas from the power generation system is discharged to the outside of the building through a pipe extending to the outside of the building, whereas air is supplied to the power generation system internally within the building.

### [Configuration of Power Generation System]

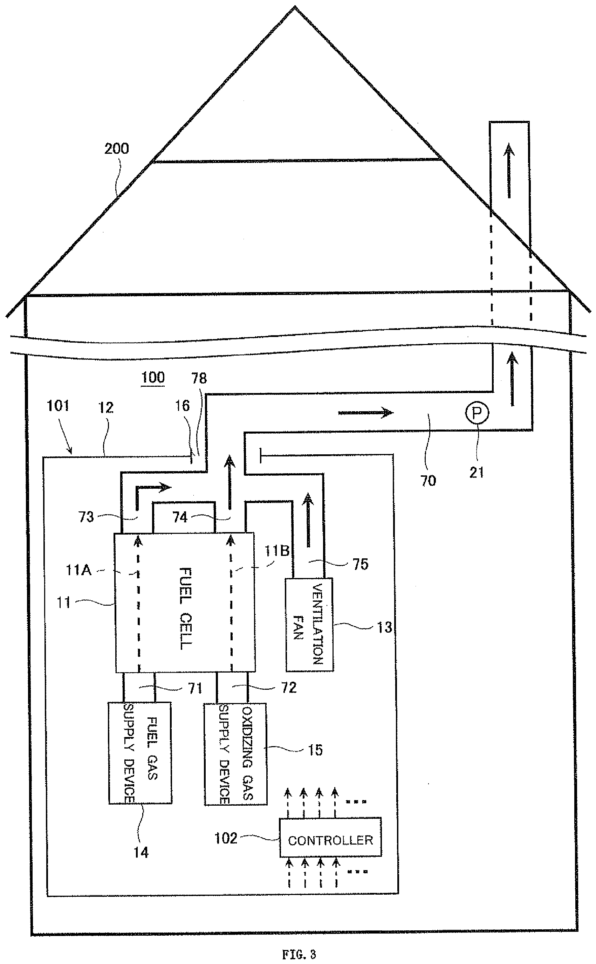

Fig. 3 is a schematic diagram showing a schematic configuration of the power generation system according to Variation 1 of Embodiment 1.

As shown in Fig. 3, the fundamental configuration of the power generation system 100 according to Variation 1 is the same as that of the power generation system 100 according to Embodiment 1. However, the power generation system 100 according to Variation 1 is different from the power generation system 100 according to Embodiment 1 in terms of the configuration of the air supply passage 78. Specifically, in the power generation system 100 according to Variation 1, the hole 16 is formed in the wall of the casing 12 at a suitable position, such that the hole 16 extends though the wall in the thickness direction of the wall. A pipe forming the exhaust passage 70 is inserted in the hole 16, such that space is formed between the hole 16 and the exhaust passage 70. The space between the hole 16 and the exhaust passage 70 serves as the air inlet 16. The air inlet 16 serves as the air supply passage 78.

Although in Variation 1 the hole in which the pipe forming the exhaust passage 70 is inserted, and the hole that serves as the air inlet 16, are the same single hole 16, Variation 1 is not limited to this. The hole in which the pipe forming the exhaust passage 70 is inserted, and the hole that serves as the air inlet 16, may be separately formed in the casing 12. Moreover, either a single hole in the casing 12 or multiple holes in the casing 12 may serve as the air supply passage 78.

The power generation system 100 according to Variation 1 with the above-described configuration provides the same operational advantages as those of the power generation system 100 according to Embodiment 1.

In a case where the exhaust passage 70 is damaged in the power generation system 100 according to Variation 1, if the exhaust gas from the power generation system 100 leaks within the building 200, then there is a risk that the internal temperature of the building 200 increases.

However, in Variation 1, if the damage detector detects damage to the exhaust passage 70, the controller 102 stops the operation of the power generation system 100. Therefore, the leakage, within the building 200, of the exhaust gas from the power generation system 100 can be suppressed. Accordingly, an increase in the internal temperature of the building 200 can be suppressed.

### (Embodiment 2)

A power generation system according to Embodiment 2 of the present invention serves as an example where the power generation system further includes a hydrogen generation apparatus including: a reformer configured to generate a fuel gas from a raw material and water; and a combustor configured to heat the reformer.

### [Configuration of Power Generation System]

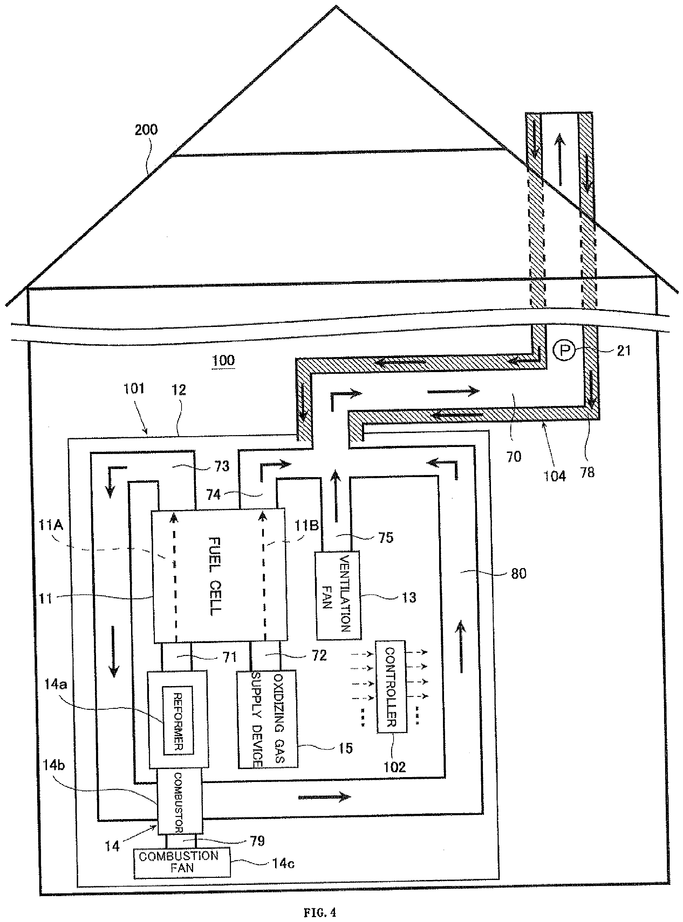

Fig. 4 is a schematic diagram showing a schematic configuration of the power generation system according to Embodiment 2 of the present invention.

As shown in Fig. 4, the fundamental configuration of the power generation system 100 according to Embodiment 2 of the present invention is the same as that of the power generation system 100 according to Embodiment 1. However, the power generation system 100 according to Embodiment 2 is different from the power generation system 100 according to Embodiment 1 in terms of the following points: in the power generation system 100 according to Embodiment 2, the fuel gas supply device 14 is configured as a hydrogen generation apparatus 14; and the off fuel gas passage 73 is connected to the combustor 14b of the hydrogen generation apparatus 14. Specifically, the hydrogen generation apparatus 14 includes the reformer 14a, the combustor 14b, and a combustion fan 14c.

The downstream end of the off fuel gas passage 73 is connected to the combustor 14b. The off fuel gas from the fuel cell 11 flows through the off fuel gas passage 73 and is supplied to the combustor 14b as a combustion fuel. The combustion fan 14c is also connected to the combustor 14b via an air feed passage 79. The combustion fan 14c may be configured in any form, so long as the combustion fan 14c is configured to supply combustion air to the combustor 14b. For example, the combustion fan 14c may be configured as a fan device such as a fan or a blower.

In the combustor 14b, the supplied off fuel gas and combustion air are combusted, and thereby a flue gas is generated. As a result, heat is generated The flue gas generated in the combustor 14b is discharged to a flue gas passage 80 after heating the reformer 14a and the like. The flue gas discharged to the flue gas passage 80 flows through the flue gas passage 80, and is then discharged to the exhaust passage 70. The flue gas discharged to the exhaust passage 70 flows through the exhaust passage 70, and is then discharged to the outside of the power generation system 100 (i.e., outside of the building 200).

A raw material supply device and a steam supply device (which are not shown) are connected to the reformer 14a. Accordingly, a raw material and steam are supplied to the reformer 14a. Natural gas, LP gas, or the like, containing methane as a main component, may be used as the raw material.

The reformer 14a includes a reforming catalyst. The reforming catalyst is, for example, any substance that is capable of catalyzing a steam reforming reaction through which to generate a hydrogen-containing gas from the raw material and steam. Examples of the reforming catalyst include a ruthenium based catalyst in which a catalyst carrier such as alumina carries ruthenium (Ru) and a nickel based catalyst in which a catalyst carrier such as alumina carries nickel (Ni).

In the reformer 14a, a hydrogen-containing gas is generated through a reforming reaction between the supplied raw material and steam. The generated hydrogen-containing gas flows through the fuel gas supply passage 71 as a fuel gas, and is then supplied to the fuel gas passage 11 A of the fuel cell 11.

Although in Embodiment 2 the hydrogen-containing gas generated by the reformer 14a is sent to the fuel cell 11 as a fuel gas, Embodiment 2 is not limited to this. As an alternative, the hydrogen generation apparatus 14 may include a shift converter including a shift conversion catalyst (e.g., a copper-zinc based catalyst) for reducing carbon monoxide in the hydrogen-containing gas sent from the reformer 14a, or include a carbon monoxide remover including an oxidation catalyst (e.g., a ruthenium-based catalyst) or a methanation catalyst (e.g., a ruthenium-based catalyst). Then, the hydrogen-containing gas that has passed through such a device may be sent to the fuel cell 11.

The combustor 14b is configured such that the off fuel gas from the fuel cell 11 is supplied to the combustor 14b as a combustion fuel. However, the configuration of the combustor 14b is not limited to this. As an alternative, the combustor 14b may be configured such that a combustion fuel is separately supplied from a combustion fuel supply device to the combustor 14b.

The power generation system 100 according to Embodiment 2 with the above-described configuration provides the same operational advantages as those of the power generation system 100 according to Embodiment 1.

Meanwhile, in the power generation system 100 according to Embodiment 2, if the exhaust gas from the power generation system 100 flows reversely and is supplied to the combustor 14b, there is a risk that imperfect combustion occurs in the combustor 14b and thereby CO is produced. Moreover, if the produced CO flows into the fuel cell 11, there is a risk that the catalyst in the fuel cell 11 degrades, and thereby the power generation efficiency of the fuel cell 11 decreases.

However, in Embodiment 2, if the damage detector detects damage to the exhaust passage 70, the controller 102 stops the operation of the power generation system 100. As a result, the amount of CO production is reduced. Accordingly, a decrease in the power generation efficiency of the fuel cell 11 can be suppressed in the power generation system 100 according to Embodiment 2.

### [Variation 1]

Next, variations of the power generation system 100 according to Embodiment 2 are described.

A power generation system according to Variation 1 of Embodiment 2 serves as an example where the damage detector is a gas composition detector and the controller determines that the exhaust passage is damaged if the damage detector detects gas composition abnormality.

The "gas composition abnormality" herein refers to a case where the composition of a gas detected by the gas composition detector is out of a gas composition range to be detected during a normal operation of the power generation system. The gas composition range to be detected during the normal operation may be set in advance through an experiment, simulation, or the like in consideration of, for example, the composition of a fuel gas supplied to the fuel cell and safety standards to be satisfied (exhaust gas composition standards) at the installation location of the power generation system. It should be noted that examples of the gas composition detector include an oxygen concentration detector, a carbon monoxide detector, a carbon dioxide concentration detector, and a combustible gas detector.

### [Configuration of Power Generation System]

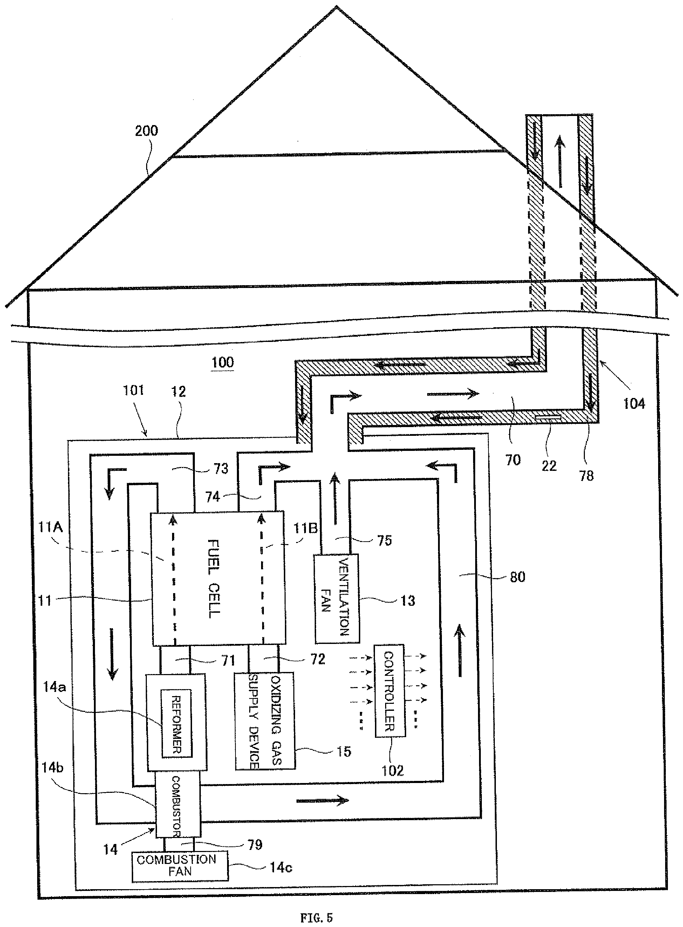

Fig. 5 is a schematic diagram showing a schematic configuration of the power generation system according to Variation 1 of Embodiment 2.

As shown in Fig. 5, the fundamental configuration of the power generation system 100 according to Variation 1 is the same as that of the power generation system 100 according to Embodiment 2. However, the power generation system 100 according to Variation 1 is different from the power generation system 100 according to Embodiment 2 in that, in the power generation system 100 according to Variation 1, an oxygen concentration detector 22 instead of the pressure detector 21 is provided at the air supply passage 78. It should be noted that the oxygen concentration detector 22 may be configured in any form, so long as the oxygen concentration detector 22 is configured to detect an oxygen concentration in the air supply passage 78. A device used as the oxygen concentration detector 22 is not particularly limited.

Although in Variation 1 the oxygen concentration detector 22 is disposed in the air supply passage 78, Variation 1 is not limited to this. Alternatively, the detector's sensor part may be disposed inside the air supply passage 78 and the other parts of the detector maybe disposed outside the air supply passage 78. Although in Variation 1 the oxygen concentration detector 22 may be provided at any position in the air supply passage 78, it is preferred that the oxygen concentration detector 22 is provided in the downstream side portion of the air supply passage 78 from the standpoint of facilitating the detection of damage to the exhaust passage 70.

### [Operation of Power Generation System]

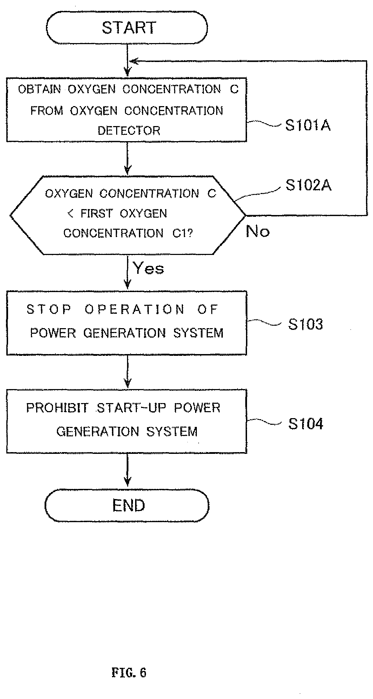

Fig. 6 is a flowchart schematically showing a damage detection operation of the power generation system according to Variation 1 of Embodiment 2.

As shown in Fig. 6, the fundamental part of the damage detection operation of the power generation system 100 according to Variation 1 of Embodiment 2 is the same as that of the damage detection operation of the power generation system 100 according to Embodiment 1. However, the damage detection operation according to Variation 1 of Embodiment 2 is different from the damage detection operation according to Embodiment 1, in that the damage detection operation according to Variation 1 of Embodiment 2 performs step S101A and step S102A instead of step S101 and step S102 of Embodiment 1.

Specifically, the controller 102 obtains an oxygen concentration C in the air supply passage 78, which is detected by the oxygen concentration detector 22 (step S101A). Next, the controller 102 determines whether the oxygen concentration C obtained in step S101A is lower than a first oxygen concentration C1 (step S102A). Here, the first oxygen concentration C1 maybe set in the following manner: for example, an oxygen concentration range in the air supply passage 78 when the exhaust passage 70 is not damaged is obtained through an experiment or the like in advance; and then the obtained oxygen concentration range may be set as the first oxygen concentration C1.

Alternatively, the first oxygen concentration C1 may be a value obtained by subtracting a predetermined concentration from an oxygen concentration, in the air supply passage 78, detected by the oxygen concentration detector 22 when the combustor 14b is not performing combustion (e.g., when only the ventilation fan 13 is operating while the power generation system 100 is stopped). In this case, erroneous detection can be suppressed even if there occurs a deviation between an oxygen concentration detected by the oxygen concentration detector 22 and an actual oxygen concentration due to, for example, long-term use of the oxygen concentration detector 22. It should be noted that the predetermined concentration varies depending on the oxygen concentration detection accuracy of the oxygen concentration detector to be used. Therefore, it is preferred that the value of the predetermined concentration is set in accordance with the oxygen concentration detector to be used, and that the value is set within a range that does not cause erroneous detection. For example, in a case where the accuracy of the oxygen concentration detector is ±0.5 %, then the first oxygen concentration C1 may be set to -1 % from the atmospheric oxygen concentration.

If the oxygen concentration C obtained in step S101A is higher than or equal to the first oxygen concentration C1 (No in step S102A), the controller 102 returns to step S101A and repeats step S101A and step S102A until the oxygen concentration C obtained in step S101A becomes lower than the first oxygen concentration C1. On the other hand, if the oxygen concentration C obtained in step S101A is lower than the first oxygen concentration C1 (in other words, if the oxygen concentration C obtained in step S101A is out of the range of the first oxygen concentration C1) (Yes in step S102A), the controller 102 proceeds to step S103. In step S103, the controller 102 stops the operation of the power generation system 100.

The power generation system 100 according to Variation 1 with the above-described configuration provides the same operational advantages as those of the power generation system 100 according to Embodiment 2.

In the power generation system 100 according to Variation 1, the controller 102 determines whether the exhaust passage 70 is damaged, based on whether the oxygen concentration in the air supply passage 78 that is detected by the oxygen concentration detector 22 is lower than the first oxygen concentration C1. However, Variation 1 is not limited to this. For example, the controller 102 may be configured to determine that the exhaust passage 70 is damaged if a difference ΔC between the oxygen concentration C detected by the oxygen concentration detector 22 before a predetermined time and the oxygen concentration C detected by the oxygen concentration detector 22 after the predetermined time is lower than a predetermined threshold concentration ΔC1 which is obtained from an experiment or the like in advance.

Although in Variation 1 the oxygen concentration detector 22 is provided at the air supply passage 78, Variation 1 is not limited to this. Alternatively, the oxygen concentration detector 22 may be provided in the casing 12. Also in this case, the controller 102 can detect damage to the exhaust passage 70 in the same manner as described above.

Moreover, although in Variation 1 the oxygen concentration detector 22 is provided at the air supply passage 78, Variation 1 is not limited to this. Further alternatively, the oxygen concentration detector 22 may be provided at the exhaust passage 70. In this case, when the exhaust passage 70 becomes damaged, the exhaust gas from the power generation system 100 is supplied back into the power generation system 100 (the casing 12) through the air supply passage 78. For this reason, the oxygen concentration in air supplied to the fuel cell 11 and the combustion fan 14c, and the oxygen concentration in air sent from the ventilation fan 13, decrease, and the oxygen concentration in the exhaust gas from the power generation system 100 that is discharged to the exhaust passage 70 decreases.

Therefore, the controller 102 may determine that the exhaust passage 70 is damaged if the oxygen concentration detected by the oxygen concentration detector 22 is lower than a second oxygen concentration C2, which is the lowest value in an oxygen concentration range in the exhaust passage 70 in a case where the power generation system 100 is operating and the exhaust passage 70 is not damaged. Alternatively, the second oxygen concentration C2 may be a value obtained by subtracting a predetermined concentration from the lowest value in an oxygen concentration range in the exhaust passage 70, the oxygen concentration range being detected by the oxygen concentration detector 22 when the combustor 14b is not performing combustion (e.g., when only the ventilation fan 13 is operating while the power generation system 100 is stopped).

In a case where the oxygen concentration detector 22 is provided at the exhaust passage 70, if the exhaust passage 70 is severely damaged at a portion upstream from the oxygen concentration detector 22 (at the same time as the air supply passage 78 is damaged), for example, if the exhaust passage 70 is completely divided into parts as an extreme example, then the oxygen concentration detector 22 detects the atmospheric oxygen concentration.

Therefore, the controller 102 may determine that the exhaust passage 70 is damaged if the oxygen concentration detected by the oxygen concentration detector 22 is higher than a third oxygen concentration C3, which is higher than the second oxygen concentration C2. Here, the third oxygen concentration C3 may be the highest value in the oxygen concentration range in the exhaust passage 70 in the case where the power generation system 100 is operating and the exhaust passage 70 is not damaged. Alternatively, the third oxygen concentration C3 may be a value obtained by subtracting a predetermined concentration from the highest value in the oxygen concentration range in the exhaust passage 70, the oxygen concentration range being detected by the oxygen concentration detector 22 when the combustor 14b is not performing combustion (e.g., when only the ventilation fan 13 is operating while the power generation system 100 is stopped).

That is, in a case where the oxygen concentration detector 22 is disposed in the exhaust passage 70, the controller 102 may measure an oxygen concentration range in the exhaust passage 70 while the power generation system 100 is operating with no damage to the exhaust passage 70 and the air supply passage 78. Then, the controller 102 can determine that the exhaust passage 70 is damaged if the oxygen concentration detector 22 detects an oxygen concentration out of the oxygen concentration range.

### [Variation 2]

A power generation system according to Variation 2 serves as an example where the damage detector is configured as a carbon monoxide concentration detector, and the controller determines that the exhaust passage is damaged if a carbon monoxide concentration detected by the carbon monoxide concentration detector is higher than or equal to a preset first carbon monoxide concentration.

### [Configuration of Power Generation System]

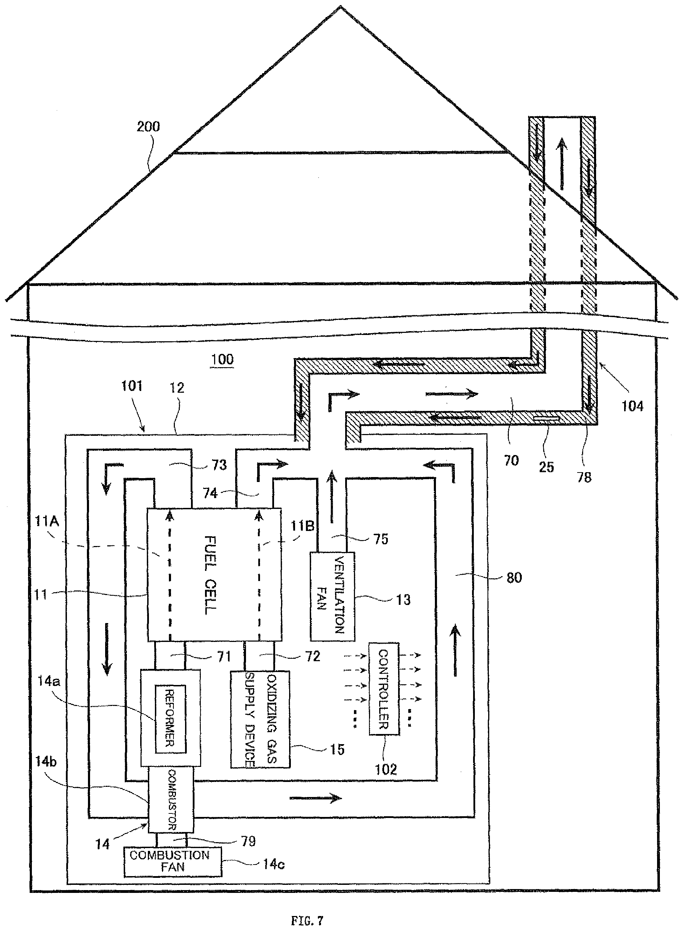

Fig. 7 is a schematic diagram showing a schematic configuration of the power generation system according to Variation 2 of Embodiment 2.

As shown in Fig. 7, the fundamental configuration of the power generation system 100 according to Variation 2 is the same as that of the power generation system 100 according to Embodiment 2. However, the power generation system 100 according to Variation 2 is different from the power generation system 100 according to Embodiment 2 in that, in the power generation system 100 according to Variation 2, a carbon monoxide concentration detector 25 instead of the pressure detector 21 is provided at the air supply passage 78. It should be noted that the carbon monoxide concentration detector 25 may be configured in any form, so long as the carbon monoxide concentration detector 25 is configured to detect a carbon monoxide concentration in the air supply passage 78. A device used as the carbon monoxide concentration detector 25 is not particularly limited.

Although in Variation 2 the carbon monoxide concentration detector 25 is disposed in the air supply passage 78, Variation 2 is not limited to this. Alternatively, the detector's sensor part may be disposed inside the air supply passage 78 and the other parts of the detector may be disposed outside the air supply passage 78. Further alternatively, the carbon monoxide concentration detector 25 may be disposed in the exhaust passage 70 or in the casing 12.

### [Operation of Power Generation System]

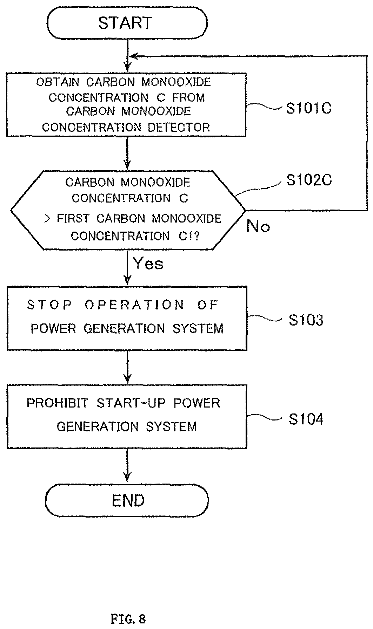

Fig. 8 is a flowchart schematically showing a damage detection operation of the power generation system according to Variation 2 of Embodiment 2.

As shown in Fig. 8, the fundamental part of the damage detection operation of the power generation system 100 according to Variation 2 of Embodiment 2 is the same as that of the damage detection operation of the power generation system 100 according to Embodiment 1. However, the damage detection operation according to Variation 2 of Embodiment 2 is different from the damage detection operation according to Embodiment 1, in that the damage detection operation according to Variation 2 of Embodiment 2 performs step S101C and step S102C instead of step S101 and step S102 of Embodiment 1.

Specifically, the controller 102 obtains a carbon monoxide concentration C in the air supply passage 78, which is detected by the carbon monoxide concentration detector 25 (step S101C). Next, the controller 102 determines whether the carbon monoxide concentration C obtained in step S101C is higher than a first carbon monoxide concentration C1 (step S102C).

Here, the first carbon monoxide concentration C1 may be set in the following manner: for example, the range of concentration of CO produced when imperfect combustion occurs in the combustor 14b due to damage to the exhaust passage 70 is obtained through an experiment or the like in advance; and then the lowest value in the obtained CO concentration range may be set as the first carbon monoxide concentration C1.

The first carbon monoxide concentration C1 varies depending on the lowest detectable concentration of the carbon monoxide concentration detector 25 to be used. It is preferred that the first carbon monoxide concentration C1 is set to be in a range from several ppm to several hundred ppm, and to be close to the lowest detectable concentration of the carbon monoxide concentration detector 25 to be used. Alternatively, the first carbon monoxide concentration C1 may be 1000 ppm.

Further alternatively, the first carbon monoxide concentration C1 may be set in the following manner: a carbon monoxide concentration detected by the carbon monoxide concentration detector 25 when the combustor 14b is not performing combustion (e.g., when only the ventilation fan 13 is operating while the power generation system 100 is stopped) is stored as zero carbon monoxide concentration; and a value obtained by adding a predetermined concentration to the zero carbon monoxide concentration may be set as the first carbon monoxide concentration C1. In this case, erroneous detection can be suppressed even if there occurs a deviation between a carbon monoxide concentration detected by the carbon monoxide concentration detector 25 and an actual carbon monoxide concentration due to, for example, long-term use of the carbon monoxide concentration detector 25.

It should be noted that the predetermined concentration varies depending on the carbon monoxide concentration detection accuracy of the carbon monoxide concentration detector to be used. Therefore, it is preferred that the value of the predetermined concentration is set in accordance with the carbon monoxide concentration detector to be used, and that the value is set within a range that does not cause erroneous detection. For example, in a case where the accuracy of the carbon monoxide concentration detector is ±0.5 %, then the first carbon monoxide concentration C1 may be set to +1 % from the above detected carbon monoxide concentration.

If the carbon monoxide concentration C obtained in step S101C is lower than or equal to the first carbon monoxide concentration C1 (No in step S102C), the controller 102 returns to step S101C and repeats step S101C and step S102C until the carbon monoxide concentration C obtained in step S101C becomes higher than the first carbon monoxide concentration C1. On the other hand, if the carbon monoxide concentration C obtained in step S101C is higher than the first carbon monoxide concentration C1 (in other words, if the carbon monoxide concentration C obtained in step S101C is out of the range of the first carbon monoxide concentration C1) (Yes in step S102C), the controller 102 proceeds to step S103. In step S103, the controller 102 stops the operation of the power generation system 100.

The power generation system 100 according to Variation 2 with the above-described configuration provides the same operational advantages as those of the power generation system 100 according to Embodiment 2.

In the power generation system 100 according to Variation 2, the controller 102 determines whether the exhaust passage 70 is damaged, based on whether the carbon monoxide concentration in the air supply passage 78 that is detected by the carbon monoxide concentration detector 25 is higher than the first carbon monoxide concentration C1. However, Variation 2 is not limited to this. For example, the controller 102 may be configured to determine that the exhaust passage 70 is damaged if a difference ΔC between the carbon monoxide concentration C detected by the carbon monoxide concentration detector 25 before a predetermined time and the carbon monoxide concentration C detected by the carbon monoxide concentration detector 25 after the predetermined time is lower than a predetermined threshold concentration ΔC1 which is obtained from an experiment or the like in advance.

### [Variation 3]

A power generation system according to Variation 3 serves as an example where the damage detector is configured as a carbon dioxide concentration detector, and the controller determines that the exhaust passage is damaged either: in a case where the carbon dioxide concentration detector is provided in the casing or at the air supply passage and a carbon dioxide concentration detected by the carbon dioxide concentration detector is higher than a preset first carbon dioxide concentration; or in a case where the carbon dioxide concentration detector is provided at the exhaust passage and a carbon dioxide concentration detected by the carbon dioxide concentration detector is lower than a preset second carbon dioxide concentration, and in a case where the carbon dioxide concentration detector is provided at the exhaust passage and a carbon dioxide concentration detected by the carbon dioxide concentration detector is higher than a third carbon dioxide concentration which is higher than the second carbon dioxide concentration.

### [Configuration of Power Generation System]

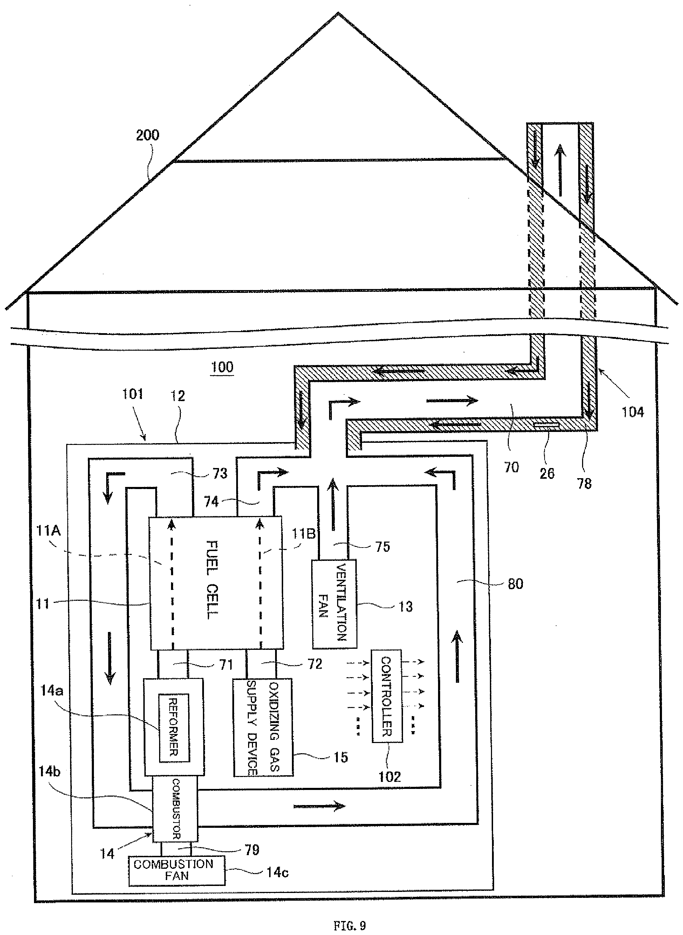

Fig. 9 is a schematic diagram showing a schematic configuration of the power generation system according to Variation 3 of Embodiment 2.

As shown in Fig. 9, the fundamental configuration of the power generation system 100 according to Variation 3 is the same as that of the power generation system 100 according to Embodiment 2. However, the power generation system 100 according to Variation 3 is different from the power generation system 100 according to Embodiment 2 in that, in the power generation system 100 according to Variation 3, a carbon dioxide concentration detector 26 instead of the pressure detector 21 is provided at the air supply passage 78. It should be noted that the carbon dioxide concentration detector 26 may be configured in any form, so long as the carbon dioxide concentration detector 26 is configured to detect a carbon dioxide concentration in the air supply passage 78. A device used as the carbon dioxide concentration detector 26 is not particularly limited.

Although in Variation 3 the carbon dioxide concentration detector 26 is disposed in the air supply passage 78, Variation 3 is not limited to this. Alternatively, the detector's sensor part may be disposed inside the air supply passage 78 and the other parts of the detector may be disposed outside the air supply passage 78. Although in Variation 3 the carbon dioxide concentration detector 26 may be provided at any position in the air supply passage 78, it is preferred that the carbon dioxide concentration detector 26 is provided in the downstream side portion of the air supply passage 78 from the standpoint of facilitating the detection of damage to the exhaust passage 70.

### [Operation of Power Generation System]

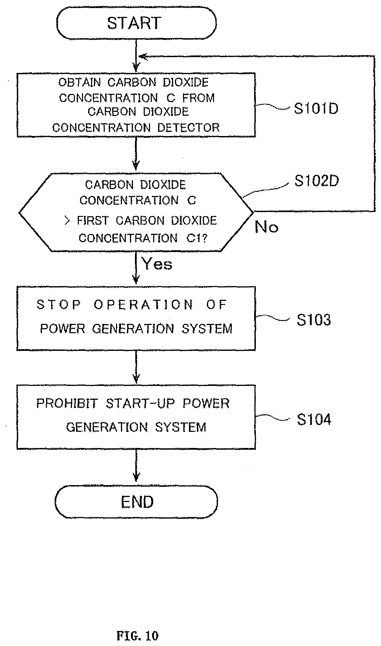

Fig. 10 is a flowchart schematically showing a damage detection operation of the power generation system according to Variation 3 of Embodiment 2.

As shown in Fig. 10, the fundamental part of the damage detection operation of the power generation system 100 according to Variation 3 of Embodiment 2 is the same as that of the damage detection operation of the power generation system 100 according to Embodiment 1. However, the damage detection operation according to Variation 3 of Embodiment 2 is different from the damage detection operation according to Embodiment 1, in that the damage detection operation according to Variation 3 of Embodiment 2 performs step S101D and step S102D instead of step S101 and step S102 of Embodiment 1.

Specifically, the controller 102 obtains a carbon dioxide concentration C in the air supply passage 78, which is detected by the carbon dioxide concentration detector 26 (step S101D). Next, the controller 102 determines whether the carbon dioxide concentration C obtained in step S101D is higher than a first carbon dioxide concentration C1 (step S102D).

The first carbon dioxide concentration C1 herein may be set, for example, as a carbon dioxide concentration range in the air supply passage 78 in a case where the power generation system 100 is operating and the exhaust passage 70 is not damaged, or as the highest value in the concentration range.

Alternatively, the first carbon dioxide concentration C1 maybe set as a value obtained by adding a predetermined concentration to the carbon dioxide concentration in the air supply passage 78 that is detected by the carbon dioxide concentration detector 26 when the combustor 14b is not performing combustion (e.g., when only the ventilation fan 13 is operating while the power generation system 100 is stopped). In this case, erroneous detection can be suppressed even if there occurs a deviation between a carbon dioxide concentration detected by the carbon dioxide concentration detector 26 and an actual carbon dioxide concentration due to, for example, long-term use of the carbon dioxide concentration detector 26. It should be noted that the predetermined concentration varies depending on the carbon dioxide concentration detection accuracy of the carbon dioxide concentration detector to be used. Therefore, it is preferred that the value of the predetermined concentration is set in accordance with the carbon dioxide concentration detector to be used, and that the value is set within a range that does not cause erroneous detection. For example, in a case where the accuracy of the carbon dioxide concentration detector is ±0.5 %, then the first carbon dioxide concentration C1 may be set to +1 % from the carbon dioxide concentration detected during the aforementioned standard period.

If the carbon dioxide concentration C obtained in step S101D is lower than or equal to the first carbon dioxide concentration C1 (No in step S102D), the controller 102 returns to step S101D and repeats step S101D and step S102D until the carbon dioxide concentration C obtained in step S101D becomes higher than the carbon dioxide concentration C1. On the other hand, if the carbon dioxide concentration C obtained in step S101D is higher than the first carbon dioxide concentration C1 (in other words, if the carbon dioxide concentration C obtained in step S101D is out of the range of the first carbon dioxide concentration C1) (Yes in step S102D), the controller 102 proceeds to step S103. In step S103, the controller 102 stops the operation of the power generation system 100.

The power generation system 100 according to Variation 3 with the above-described configuration provides the same operational advantages as those of the power generation system 100 according to Embodiment 2.

In the power generation system 100 according to Variation 3, the controller 102 determines whether the exhaust passage 70 is damaged, based on whether the carbon dioxide concentration in the air supply passage 78 that is detected by the carbon dioxide concentration detector 26 is higher than the first carbon dioxide concentration C1. However, Variation 3 is not limited to this. For example, the controller 102 may be configured to determine that the exhaust passage 70 is damaged if a difference ΔC between the carbon dioxide concentration C detected by the carbon dioxide concentration detector 26 before a predetermined time and the carbon dioxide concentration C detected by the carbon dioxide concentration detector 26 after the predetermined time is higher than a predetermined threshold concentration ΔC1 which is obtained from an experiment or the like in advance.

Although in Variation 3 the carbon dioxide concentration detector 26 is provided at the air supply passage 78, Variation 3 is not limited to this. Alternatively, the carbon dioxide concentration detector 26 may be provided in the casing 12. Also in this case, the controller 102 can detect damage to the exhaust passage 70 in the same manner as described above.

Moreover, although in Variation 3 the oxygen concentration detector 22 is provided at the air supply passage 78, Variation 3 is not limited to this. Further alternatively, the carbon dioxide concentration detector 26 may be provided at the exhaust passage 70. In this case, when the exhaust passage 70 becomes damaged, the exhaust gas from the power generation system 100 is supplied back into the power generation system 100 (the casing 12) through the air supply passage 78. For this reason, the carbon dioxide concentration in air supplied to the fuel cell 11 and the combustion fan 14c, and the carbon dioxide concentration in air sent from the ventilation fan 13, increase, and the carbon dioxide concentration in the exhaust gas from the power generation system 100 that is discharged to the exhaust passage 70 increases.

Therefore, the controller 102 may determine that the exhaust passage 70 is damaged if the carbon dioxide concentration detected by the carbon dioxide concentration detector 26 is higher than a third carbon dioxide concentration C3, which is the highest value in a carbon dioxide concentration range in the exhaust passage 70 in a case where the power generation system 100 is operating and the exhaust passage 70 is not damaged. Alternatively, the third carbon dioxide concentration C3 may be a value obtained by adding a predetermined concentration to the highest value in a carbon dioxide concentration range in the exhaust passage 70, the carbon dioxide concentration range being detected by the carbon dioxide concentration detector 26 when the combustor 14b is not performing combustion (e.g., when only the ventilation fan 13 is operating while the power generation system 100 is stopped).

In a case where the carbon dioxide concentration detector 26 is provided at the exhaust passage 70, if the exhaust passage 70 is severely damaged at a portion upstream from the carbon dioxide concentration detector 26 (at the same time as the air supply passage 78 is damaged), for example, if the exhaust passage 70 is completely divided into parts as an extreme example, then the carbon dioxide concentration detector 26 detects the atmospheric carbon dioxide concentration.

Therefore, the controller 102 may determine that the exhaust passage 70 is damaged if the carbon dioxide concentration detected by the carbon dioxide concentration detector 26 is lower than a second carbon dioxide concentration C2, which is lower than the third carbon dioxide concentration C2. Here, the second carbon dioxide concentration C2 may be the lowest value in the carbon dioxide concentration range in the exhaust passage 70 in the case where the power generation system 100 is operating and the exhaust passage 70 is not damaged. Alternatively, the second carbon dioxide concentration C2 may be a value obtained by adding a predetermined concentration to the lowest value in the carbon dioxide concentration range in the exhaust passage 70, the carbon dioxide concentration range being detected by the carbon dioxide concentration detector 26 when the combustor 14b is not performing combustion (e.g., when only the ventilation fan 13 is operating while the power generation system 100 is stopped).

That is, in a case where the carbon dioxide concentration detector 26 is disposed in the exhaust passage 70, the controller 102 may measure a carbon dioxide concentration range in the exhaust passage 70 while the power generation system 100 is operating with no damage to the exhaust passage 70 and the air supply passage 78. Then, the controller 102 can determine that the exhaust passage 70 is damaged if the carbon dioxide concentration detector 26 detects a carbon dioxide concentration out of the oxygen concentration range.

### [Variation 4]

A power generation system according to Variation 4 serves as an example where a downstream end of the air supply passage is either connected to an air inlet of the casing or open to an interior of the casing, and the damage detector is provided near the downstream end of the air supply passage.

### [Configuration of Power Generation System]

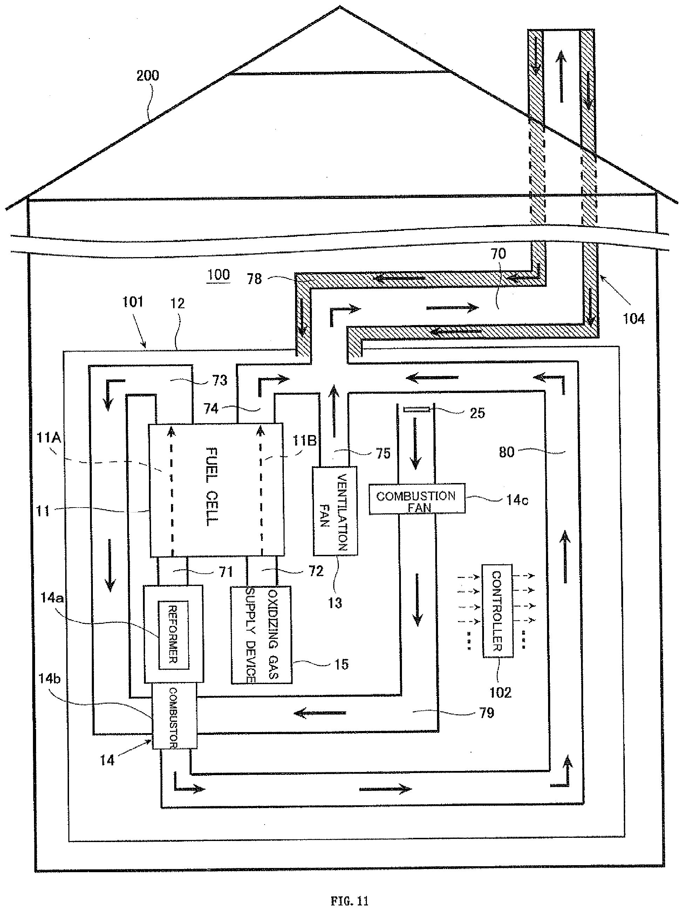

Fig. 11 is a schematic diagram showing a schematic configuration of the power generation system according to Variation 4 of Embodiment 2.

As shown in Fig. 11, the fundamental configuration of the power generation system 100 according to Variation 4 is the same as that of the power generation system 100 according to Embodiment 2. However, the power generation system 100 according to Variation 4 is different from the power generation system 100 according to Embodiment 2 in that, in the power generation system 100 according to Variation 4, the carbon monoxide concentration detector 25 instead of the pressure detector 21 is provided near the downstream end of the air supply passage 78. To be more specific, the power generation system 100 according to Variation 4 is different from the power generation system 100 according to Embodiment 2 in terms of the following points: the upstream end of the air feed passage (combustion air feed passage) 79 is positioned near the downstream end of the air supply passage 78; and the carbon monoxide concentration detector 25 is provided at the air feed passage 79.

Specifically, in the power generation system 100 according to Variation 4, the combustion fan (combustion air feeder) 14c is provided along the air feed passage 79, and the carbon monoxide concentration detector 25 is provided near the upstream end of the air feed passage 79.

As mentioned above, while the power generation system 100 is operating and a high-temperature exhaust gas is being discharged, the combustor 14b is performing combustion. If the exhaust passage 70 is damaged and the high-temperature exhaust gas flows reversely into the casing 12, then the exhaust gas that has reversely flowed into the casing 12 is partially supplied by the combustion fan 14c to the combustor 14b through the air feed passage 79. If the exhaust gas that has reversely flowed into the casing 12 is supplied to the combustor 14b, there is a risk that imperfect combustion occurs, and thereby carbon monoxide is produced. The combustion fan 14c is operating also when a reverse flow into the casing 12 occurs again, in which a high-temperature exhaust gas containing the produced carbon monoxide flows reversely into the casing 12. Accordingly, the exhaust gas is supplied to the combustor 14b through the air feed passage 79. Therefore, in the power generation system 100 according to Variation 4, the carbon monoxide concentration detector 25 is disposed at the air feed passage 79, and this makes it possible to detect the carbon monoxide concentration in the exhaust gas and to determine whether the exhaust passage 70 is damaged. Since the damage detection operation of detecting damage to the exhaust passage 70, which is performed by the controller 102, is performed in the same manner as in the power generation system 100 according to Variation 2, a detailed description of the damage detection operation is omitted.

The power generation system 100 according to Variation 4 with the above-described configuration provides the same operational advantages as those of the power generation system 100 according to Embodiment 2.

In the power generation system 100 according to Variation 4, the downstream end of the air feed passage 79 is disposed at a position that is closer to the downstream end of the air supply passage 78 than to the downstream end of the ventilation passage 75. This facilitates that the exhaust gas that flows reversely is supplied to the combustor 14b through the air feed passage 79, and thereby allows the power generation system 100 according to Variation 4 to detect damage to the exhaust passage 70 more promptly.

Further, in the power generation system 100 according to Variation 4, the downstream end of the air feed passage 79 is disposed at a position that is closer to the downstream end of the air supply passage 78 than to the downstream end of the oxidizing gas supply passage 72. This facilitates that the exhaust gas that flows reversely is supplied to the combustor 14b through the air feed passage 79, and thereby allows the power generation system 100 according to Variation 4 to detect damage to the exhaust passage 70 more promptly.

If carbon monoxide in the exhaust gas that flows reversely is supplied to the fuel cell 11 through the oxidizing gas supply passage 72, then there is a risk that the catalyst in the fuel cell 11 degrades and the power generation efficiency of the fuel cell 11 decreases. However, according to the above configuration, the carbon monoxide tends to be supplied to the air feed passage 79 rather than to the fuel cell 11. Therefore, the carbon monoxide can be detected more promptly. Accordingly, in the case of the power generation system 100 according to Variation 4, the operation of the power generation system 100 can be stopped before the carbon monoxide is supplied to the fuel cell 11, and a decrease in the power generation efficiency of the fuel cell 11 can be suppressed.

Although in the power generation system 100 according to Variation 4 the carbon monoxide concentration detector 25 is provided at the air feed passage 79, Variation 4 is not limited to this. As an alternative example, the downstream end of the oxidizing gas supply passage 72 may be positioned near the downstream end of the air supply passage 78, and the carbon monoxide concentration detector 25 may be provided near the downstream end of the oxidizing gas supply passage 72. As another alternative example, the downstream end of the ventilation passage 75 may be positioned near the downstream end of the air supply passage 78, and the carbon monoxide concentration detector 25 may be provided near the downstream end of the ventilation passage 75.

However, it is preferred to provide the carbon monoxide concentration detector 25 in the air feed passage 79 for the reasons described below.

For example, the oxidizing gas supply device 15 does not operate during the start-up, which is performed over a period from the start of the operation of the power generation system 100 until the start of the electric power generation by the fuel cell 11. During the start-up, the temperature of the reformer 14a is increased by performing combustion in the combustor 14b so that the reformer 14a can generate hydrogen in an amount that is necessary for the electric power generation by the fuel cell 11. Accordingly, a high-temperature exhaust gas is discharged during the start-up.

That is, the high-temperature exhaust gas is discharged during the start-up in which the oxidizing gas supply device 15 does not operate. For this reason, if the exhaust passage 70 is damaged during the start-up, there is a possibility that the high-temperature exhaust gas flows reversely into the casing 12. In addition, similar to the oxidizing gas supply device 15, the ventilation fan 13 does not necessarily operate while the high-temperature exhaust gas is being discharged.

Meanwhile, the combustion fan 14c is required to continue sucking combustion air from the interior of the casing 12 in order to continue the combustion in the combustor 14b. If the flow rate of the combustion air falls below a predetermined flow rate, then the combustion in the combustor 14b cannot be continued and the discharging of the high-temperature gas is stopped. That is, when the high-temperature gas is being discharged, it means that the combustion air (i.e., gas in the casing 12) is being supplied to the combustor 14b at the predetermined flow rate or higher. Accordingly, by providing the carbon monoxide concentration detector 25 at the air feed passage 79, carbon monoxide produced in the combustor 14b can be detected more promptly.

The power generation system 100 according to Variation 4 includes the carbon monoxide concentration detector 25, and determines whether the exhaust passage 70 is damaged, based on a carbon monoxide concentration detected by the carbon monoxide concentration detector 25. However, Variation 4 is not limited to this. As an alternative example, the power generation system 100 according to Variation 4 may include the oxygen concentration detector 22 instead of the carbon monoxide concentration detector 25. In this case, damage to the exhaust passage 70 can be detected in the same manner as in the power generation system 100 according to Variation 1. As another alternative example, the power generation system 100 according to Variation 4 may include the carbon dioxide concentration detector 26 instead of the carbon monoxide concentration detector 25. In this case, damage to the exhaust passage 70 can be detected in the same manner as in the power generation system 100 according to Variation 3.

### [Variation 5]

A power generation system according to Variation 5 of Embodiment 2 of the present invention serves as an example where the damage detector is configured as a temperature detector, and the controller determines that the exhaust passage is damaged if a temperature detected by the temperature detector is higher than a preset first temperature or lower than a second temperature which is lower than the first temperature.

### [Configuration of Power Generation System]

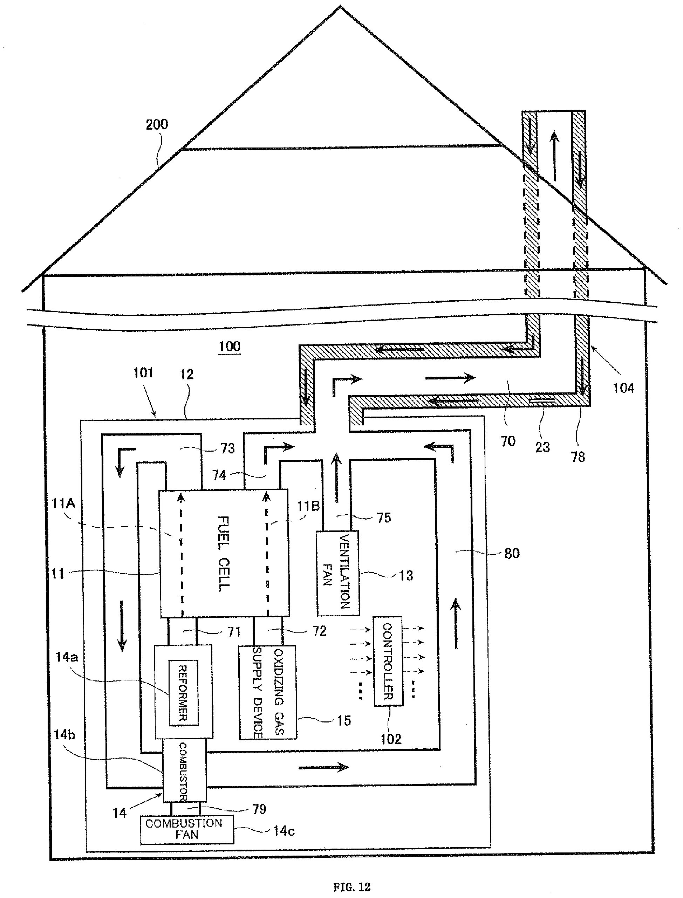

Fig. 12 is a schematic diagram showing a schematic configuration of the power generation system according to Variation 5 of Embodiment 2.

As shown in Fig. 12, the fundamental configuration of the power generation system 100 according to Variation 5 is the same as that of the power generation system 100 according to Embodiment 2. However, the power generation system 100 according to Variation 5 is different from the power generation system 100 according to Embodiment 2 in that, in the power generation system 100 according to Variation 5, a temperature detector 23 instead of the pressure detector 21 is provided at the air supply passage 78. It should be noted that the temperature detector 23 may be configured in any form, so long as the temperature detector 23 is configured to detect a temperature in the air supply passage 78. A device used as the temperature detector 23 is not particularly limited. Although in Variation 2 the temperature detector 23 is disposed in the air supply passage 78, Variation 5 is not limited to this. The detector's sensor part may be disposed inside the air supply passage 78 and the other parts of the detector may be disposed outside the air supply passage 78.

### [Operation of Power Generation System]

In Fig. 12, if the exhaust passage 70 becomes damaged at a portion that is upstream from a portion, of the exhaust passage 70, at which the temperature detector 23 is disposed, then a temperature detected by the temperature detector 23 after the occurrence of the damage to the exhaust passage 70 is expected to be higher than a temperature detected by the temperature detector 23 before the occurrence of the damage to the exhaust passage 70. Accordingly, the controller 102 can determine that the exhaust passage 70 is damaged if the pressure detected by the temperature detector 23 is higher than a first temperature, which is the highest value in a temperature range in the exhaust passage 70 in a case where the power generation system 100 is operating and the exhaust passage 70 is not damaged.

If the exhaust passage 70 is completely divided into parts and severely damaged, the flow rate of the exhaust gas from the power generation system 100 increases, and the flow rate of the gas (air) flowing through the air supply passage 78 increases. Accordingly, the temperature detected by the temperature detector 23 provided at the air supply passage 78 is expected to decrease. Further, the temperature of the gas (air) flowing through the air supply passage 78 increases when exchanging heat with the gas flowing through the exhaust passage 70. However, for example, if both of the exhaust passage 70 and the air supply passage 78 become damaged, it is expected that the temperature of the gas (air) flowing through the air supply passage 78 does not increase.

Accordingly, the controller 102 can determine that the exhaust passage 70 is damaged if the temperature detected by the temperature detector 23 is lower than a second temperature, which is the lowest value in the temperature range in the exhaust passage 70 in the case where the power generation system 100 is operating and the exhaust passage 70 is not damaged.

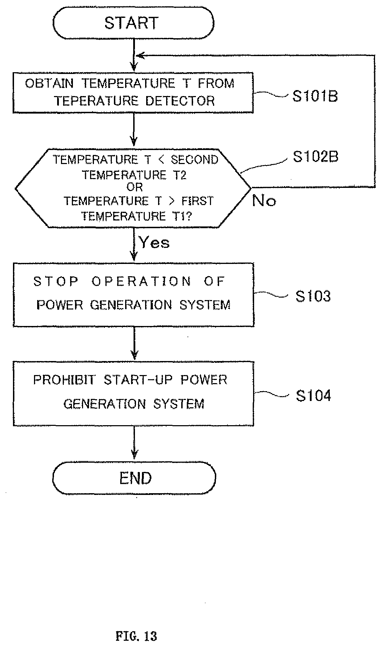

That is, the controller 102 can determine that the exhaust passage 70 is damaged if the temperature detected by the temperature detector 23 is out of a predetermined temperature range that is set in advance. Hereinafter, a damage detection operation of the power generation system 100, which the controller 102 performs based on a temperature detected by the temperature detector 23, is described with reference to Fig. 13.

Fig. 13 is a flowchart schematically showing the damage detection operation of the power generation system according to Variation 5 of Embodiment 2.

As shown in Fig. 13, the fundamental part of the damage detection operation of the power generation system 100 according to Variation 5 of Embodiment 2 is the same as that of the damage detection operation of the power generation system 100 according to Embodiment 1. However, the damage detection operation according to Variation 5 of Embodiment 2 is different from the damage detection operation according to Embodiment 1, in that the damage detection operation according to Variation 5 of Embodiment 2 performs step S101B and step S102B instead of step S101 and step S102 of Embodiment 1.

Specifically, the controller 102 obtains a temperature T in the air supply passage 78, which is detected by the temperature detector 23 (step S101B). Next, the controller 102 determines whether the temperature T obtained in step S101B is lower than a second temperature T2 or higher than a first temperature T1, or neither (step S102B).

Here, the first temperature T1 may be set in the following manner: for example, a temperature range in the air supply passage 78 when the exhaust passage 70 is damaged is obtained through an experiment or the like in advance; and then the highest temperature in the temperature range may be set as the first temperature T1. As an alternative example, a temperature that is, for example, 20 °C higher than the internal temperature of the building 200 or than the external temperature may be set as the first temperature T1. Similarly, the second temperature T2 may be set in the following manner: for example, the temperature range in the air supply passage 78 when the exhaust passage 70 is damaged is obtained through an experiment or the like in advance; and then the lowest temperature in the temperature range may be set as the second temperature T2. As an alternative example, a temperature that is, for example, 20°C lower than the internal temperature of the building 200 or than the external temperature may be set as the second temperature T2.

If the temperature T obtained in step S101B is neither lower than the second temperature T2 nor higher than the first temperature T1 (No in step S102B), the controller 102 returns to step S101B and repeats step S101B and step S102B until the temperature T becomes lower than the second temperature T2 or higher than the first temperature T1. On the other hand, if the temperature T obtained in step S101B is lower than the second temperature T2 or higher than the first temperature T1 (Yes in step S102B), then the controller 102 proceeds to step S103. In step S103, the controller 102 stops the operation of the power generation system 100.

The power generation system 100 according to Variation 5 with the above-described configuration provides the same operational advantages as those of the power generation system 100 according to Embodiment 2.

In Variation 5, the temperature detector 23 is provided at the air supply passage 78, and it is determined whether the exhaust passage 70 is damaged based on the determination whether the temperature T detected by the temperature detector 23 is lower than the second temperature T2 or higher than the first temperature T1, or neither. However, Variation 5 is not limited to this.

For example, the controller 102 may be configured to determine whether the exhaust passage 70 is damaged, by determining whether a difference ΔT between the temperature T detected by the temperature detector 23 before a predetermined time and the temperature T detected by the temperature detector 23 after the predetermined time is lower than a second threshold temperature ΔT2 which is obtained from an experiment or the like in advance or higher than a first threshold temperature ΔT1 which is higher than the second threshold temperature, or neither. The reason for this is described below.

Described first is a case where ΔT becomes lower than the second threshold temperature ΔT2 which is obtained through an experiment or the like in advance.

For example, during the start-up of the fuel cell system 101, the combustor 14b is operated to increase the temperature of the reformer 14a to such a temperature as to allow the reforming reaction to occur. Accordingly, the temperature of a flue gas discharged to the exhaust passage 70 increases gradually. This causes the temperature of the air supply passage 78, which exchanges heat with the exhaust passage 70, to increase gradually. In this case, the temperature detected by the temperature detector 23 is also expected to increase gradually.

However, if the exhaust passage 70 becomes damaged at a portion that is upstream from a portion, of the exhaust passage 70, at which the temperature detector 23 is provided, then the flue gas is ejected from the damaged portion. As a result, the exhaust passage 70 does not exchange heat with the downstream portion of the air supply passage 78. For this reason, the temperature of the air supply passage 78 does not increase, which results in ΔT being lower than the second threshold temperature ΔT2. Therefore, the controller 102 can determine that the exhaust passage 70 is damaged if the difference ΔT between the temperature T detected by the temperature detector 23 before the predetermined time and the temperature T detected by the temperature detector 23 after the predetermined time is lower than the second threshold temperature ΔT2 which is obtained through an experiment or the like in advance.

Described next is a case where ΔT becomes higher than the first threshold temperature ΔT1.

For example, during the start-up of the fuel cell system 101, the combustor 14b is operated to increase the temperature of the reformer 14a to such a temperature as to allow the reforming reaction to occur. Accordingly, the temperature of the flue gas discharged to the exhaust passage 70 increases gradually. This causes the temperature of the air supply passage 78, which exchanges heat with the exhaust passage 70, to increase gradually. In this case, the temperature detected by the temperature detector 23 is expected to increase gradually.

However, if the exhaust passage 70 becomes damaged at a portion downstream from the portion, of the exhaust passage 70, at which the temperature detector 23 is provided, then the flue gas directly flows into the air supply passage 78 from the damaged portion. As a result, the temperature detected by the temperature detector 23 increases rapidly. For this reason, ΔT becomes higher than the first threshold temperature ΔT1. Therefore, the controller 102 can determine that the exhaust passage 70 is damaged if the difference ΔT between the temperature T detected by the temperature detector 23 before the predetermined time and the temperature T detected by the temperature detector 23 after the predetermined time is higher than the first threshold temperature ΔT1.

Although in Variation 5 the temperature detector 23 is disposed at the air supply passage 78, Variation 5 is not limited to this. Alternatively, the temperature detector 23 may be disposed at the exhaust passage 70.

In this case, for example, if the exhaust passage 70 is completely divided into parts and severely damaged at its middle portion, then it is expected that the flow rate of the exhaust gas from the power generation system 100 increases and the temperature detected by the temperature detector 23 decreases. For this reason, the controller 102 may determine that the exhaust passage 70 is damaged if the temperature detected by the temperature detector 23 is lower than a third temperature T3 which is set in advance. Here, the third temperature T3 may be set in the following manner: for example, a temperature range in the exhaust passage 70 when the exhaust passage 70 is not damaged is obtained through an experiment or the like in advance; and then the lowest temperature in the temperature range may be set as the third temperature T3.

The gas flowing through the exhaust passage 70 exchanges heat with the gas flowing through the air supply passage 78, and the temperature of the gas flowing through the exhaust passage 70 decreases, accordingly. However, if the exhaust passage 70 becomes damaged and the gas flowing through the exhaust passage 70 leaks to the air supply passage 78, then the temperature of the gas flowing through the air supply passage 78 increases and the amount of heat transferred from the gas flowing through the exhaust passage 70 to the gas flowing through the air supply passage 78 decreases. Therefore, if the temperature detector 23 is disposed upstream from the damaged portion of the exhaust passage 70, the temperature detected by the temperature detector 23 is expected to increase.

Thus, the controller 102 may determine that the exhaust passage 70 is damaged if the temperature detected by the temperature detector 23 is higher than a fourth temperature T4 which is set in advance. Here, the fourth temperature T4 may be set in the following manner: for example, the temperature range in the exhaust passage 70 when the exhaust passage 70 is not damaged is obtained through an experiment or the like in advance; and then the highest temperature in the temperature range may be set as the fourth temperature T4.

That is, a temperature range in the exhaust passage 70 or in the air supply passage 78 may be measured while the power generation system 100 is operating with no damage to the exhaust passage 70 and the air supply passage 78, and if the temperature detector 23 detects a temperature out of the temperature range, the controller 102 can determine that the exhaust passage 70 is damaged.

### [Variation 6]

A power generation system according to Variation 6 of Embodiment 2 of the present invention serves as an example where the damage detector is a combustible gas detector provided at the air supply passage or in the casing, and the controller determines that the exhaust passage is damaged if the combustible gas detector detects a combustible gas while the operation of the fuel cell system is stopped.

### [Configuration of Power Generation System]

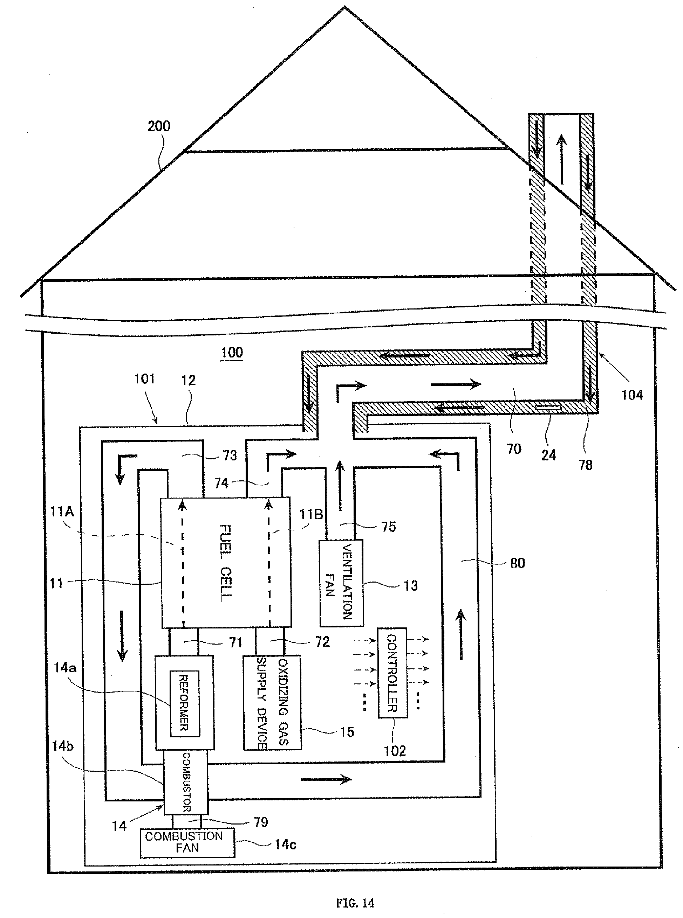

Fig. 14 is a schematic diagram showing a schematic configuration of the power generation system according to Variation 6 of Embodiment 2.

As shown in Fig. 14, the fundamental configuration of the power generation system 100 according to Variation 6 is the same as that of the power generation system 100 according to Embodiment 2. However, the power generation system 100 according to Variation 6 is different from the power generation system 100 according to Embodiment 2 in that, in the power generation system 100 according to Variation 6, a combustible gas detector 24 instead of the pressure detector 21 is provided at the air supply passage 78. It should be noted that the combustible gas detector 24 may be configured in any form, so long as the combustible gas detector 24 is configured to detect the concentration of a combustible gas (e.g., a raw material such as hydrogen or methane) in the air supply passage 78. A device used as the combustible gas detector 24 is not particularly limited. The combustible gas to be detected by the combustible gas detector 24 may be either a single kind of combustible gas or multiple kinds of combustible gas.

Although in Variation 6 the combustible gas detector 24 is disposed in the air supply passage 78, Variation 6 is not limited to this. Alternatively, the detector's sensor part may be disposed inside the air supply passage 78 and the other parts of the detector may be disposed outside the air supply passage 78. Although in Variation 6 the combustible gas detector 24 may be provided at any position in the air supply passage 78, it is preferred that the combustible gas detector 24 is provided in the downstream side portion of the air supply passage 78 from the standpoint of facilitating the detection of damage to the exhaust passage 70. Further alternatively, the combustible gas detector 24 may be disposed in the casing 12.

### [Operation of Power Generation System]

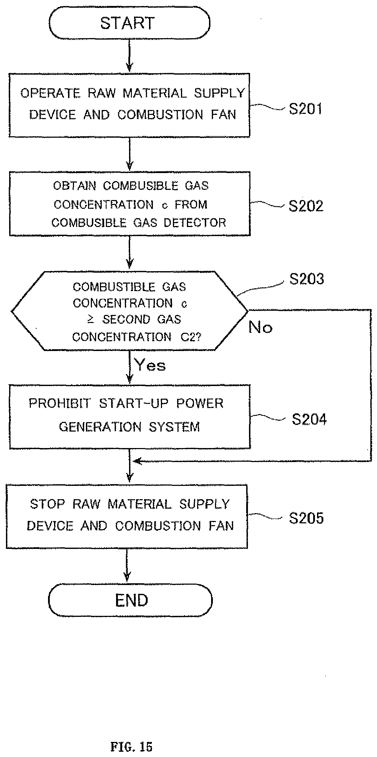

Fig. 15 is a flowchart schematically showing a damage detection operation of the power generation system according to Variation 6 of Embodiment 2.

As shown in Fig. 15, the damage detection operation of the power generation system 100 according to Variation 6 of Embodiment 2 is different from the damage detection operation of the power generation system 100 according to Embodiment 1, in that the power generation system 100 according to Variation 6 of Embodiment 2 performs the damage detection operation while the fuel cell system 101 is stopped.

Specifically, while the power generation system 100 is stopped, the controller 102 operates a raw material supply device, which is not shown, and the combustion fan 14c (step S201). Accordingly, a raw material from the raw material supply device is supplied to the combustor 14b as a combustible gas. Air is also supplied to the combustor 14b from the combustion fan 14c. The raw material supplied to the combustor 14b is diluted with the air and discharged to the exhaust passage 70 from the flue gas passage 80. The raw material and air discharged to the exhaust passage 70 flow through the exhaust passage 70, and are then discharged to the atmosphere from the downstream end (opening) of the exhaust passage 70.

Next, the controller 102 obtains a combustible gas concentration c in the air supply passage 78, which is detected by the combustible gas detector 24 (step S202). It should be noted that it is preferred that the controller 102 obtains the concentration c after the raw material is discharged from the downstream end of the exhaust passage 70 to the atmosphere, from the standpoint of detecting damage to the exhaust passage 70 more accurately. In this case, for example, the controller 102 may be configured to obtain, in advance, a time period from when the raw material supply device is started to when the raw material is discharged from the downstream end of the exhaust passage 70 to the atmosphere, and to obtain the combustible gas concentration c after the time period has elapsed.

Next, the controller 102 determines whether or not the concentration c obtained in step S202 is higher than or equal to a second concentration C2 (step S203). Here, the second concentration C2 may be set in the following manner: for example, a combustible gas concentration range in the air supply passage 78 when the exhaust passage 70 is damaged is obtained through an experiment or the like in advance; and then the obtained combustible gas concentration range may be set as the second concentration C2.

If the concentration c obtained in step S202 is lower than the second concentration C2 (No in step S203), the controller 102 proceeds to step S205. On the other hand, if the concentration c obtained in step S202 is higher than or equal to the second concentration C2 (Yes in step S203), the controller 102 proceeds to step S204.

In step S204, the controller 102 prohibits the start-up of the power generation system 100. That is, the controller 102 prohibits the start-up of the fuel cell system 101 and the start-up of a combustion apparatus 103. Then, the controller 102 stops the raw material supply device and the combustion fan 14c (step S205), and ends the program.

The power generation system 100 according to Variation 6 with the above-described configuration provides the same operational advantages as those of the power generation system 100 according to Embodiment 2.

Although in Variation 6 the raw material supply device is configured to supply the raw material to the combustor 14b, Variation 6 is not limited to this. Alternatively, the raw material supply device may be configured to supply the raw material to the reformer 14a, such that the raw material flows from the reformer 14 through the fuel gas supply passage 71 and the like and is supplied from the flue gas passage 80 to the exhaust passage 70. Moreover, although in Variation 6 the combustion fan 14c is operated to dilute the raw material that is supplied to the exhaust passage 70, Variation 6 is not limited to this. Alternatively, the ventilation fan 13 and/or the oxidizing gas supply device 15 may be operated to dilute the raw material that is supplied to the exhaust passage 70.

Furthermore, although in Variation 6 the damage detection operation is performed while the power generation system 100 (the fuel cell system 101) is stopped, Variation 6 is not limited to this. For example, the damage detection operation may be performed at the start-up of the power generation system 100 (the fuel cell system 101).

### (Embodiment 3)

A power generation system according to Embodiment 3 of the present invention serves as an example where the power generation system further includes a combustion apparatus disposed outside the casing, and the exhaust passage branches off into at least two passages such that upstream ends thereof are connected to the combustion apparatus and the fuel cell system, respectively.

### [Configuration of Power Generation System]

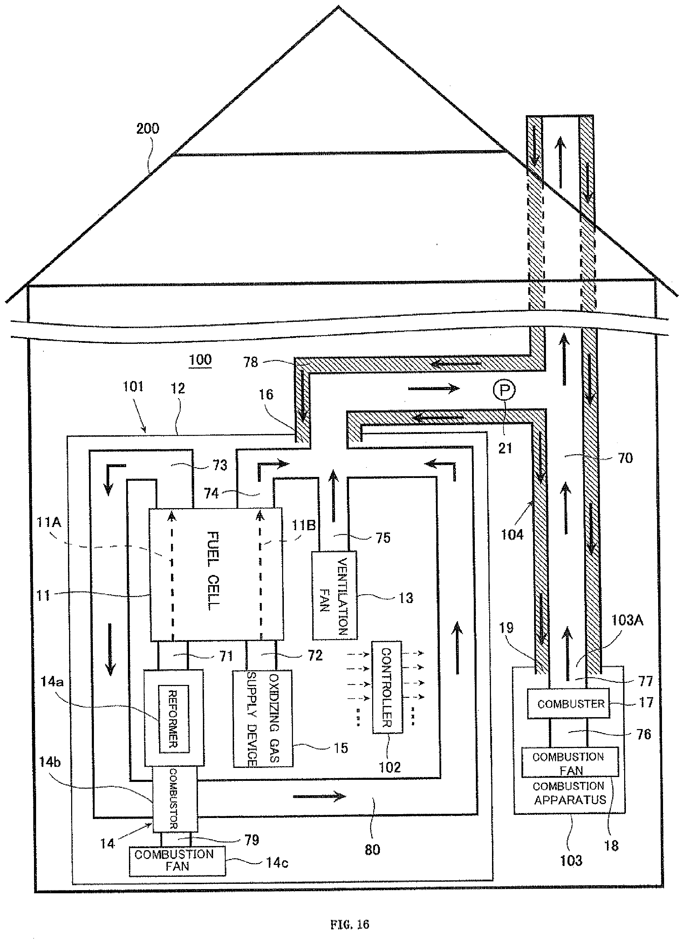

Fig. 16 is a schematic diagram showing a schematic configuration of the power generation system according to Embodiment 3 of the present invention.

As shown in Fig. 16, the fundamental configuration of the power generation system 100 according to Embodiment 3 of the present invention is the same as that of the power generation system 100 according to Embodiment 2. However, the power generation system 100 according to Embodiment 3 is different from the power generation system 100 according to Embodiment 2, in that the power generation system 100 according to Embodiment 3 further includes a combustion apparatus 103 disposed outside the casing 12 and the exhaust passage 70 is configured to connect the casing 12 and the combustion apparatus 103.

Specifically, the combustion apparatus 103 includes a combustor 17 and a combustion fan (combustion air feeder) 18. The combustor 17 and the combustion fan 18 are connected to each other via a combustion air feed passage 76. The combustion fan 18 may be configured in any form, so long as the combustion fan 18 is configured to supply combustion air to the combustor 17. For example, the combustion fan 18 may be configured as a fan device such as a fan or a blower.

A combustion fuel supply device, which is not shown, supplies the combustor 17 with a combustion fuel, for example, a combustible gas such as natural gas or a liquid fuel such as kerosene. The combustor 17 combusts the combustion air supplied from the combustion fan 18 and the combustion fuel supplied from the combustion fuel supply device. As a result, heat and a flue gas are generated. It should be noted that the generated heat can be used for heating water. That is, the combustion apparatus 103 maybe used as a boiler.

The upstream end of an exhaust gas passage 77 is connected to the combustor 17, and the downstream end of the exhaust gas passage 77 is connected to the exhaust passage 70. Accordingly, the flue gas generated by the combustor 17 is discharged to the exhaust passage 70 through the exhaust gas passage 77. That is, the flue gas generated by the combustor 17 is discharged to the exhaust passage 70 as an exhaust gas from the combustion apparatus 103. Then, the flue gas discharged to the exhaust passage 70 flows through the exhaust passage 70, and is then discharged to the outside of the building 200.

A hole 19 is formed in a wall of the combustion apparatus 103 at a suitable position, such that the hole 19 extends through the wall in the thickness direction of the wall. A pipe forming the exhaust passage 70 and a pipe forming the air supply passage 78 (i.e., a double pipe) are connected to the hole 19. Specifically, the exhaust passage 70 branches off into two passages and the two upstream ends thereof are connected to the hoes 16 and 19, respectively. Similarly, the air supply passage 78 branches off into two passages and the two downstream ends thereof are connected to the holes 16 and 19, respectively.

### [Operation of Power Generation System]

Described below is an operation performed by the power generation system 100 according to Embodiment 3 in a case where the damage detector has detected damage to the exhaust passage 70 while the combustion apparatus 103 is operating.

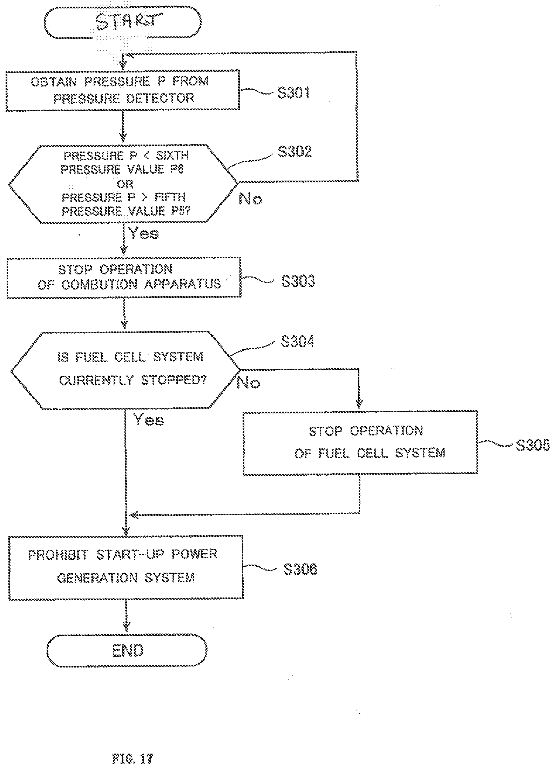

Fig. 17 is a flowchart schematically showing a damage detection operation of the power generation system according to Embodiment 3.

As shown in Fig. 17, the controller 102 (to be exact, the damage determiner of the controller 102) obtains a pressure P in the exhaust passage 70, which is detected by the pressure detector 21 while the combustion apparatus 103 is operating (step S301). Here, "while the combustion apparatus 103 is operating" refers to a period over which the exhaust gas from the combustion apparatus 103 is discharged to the exhaust passage 70. In Embodiment 3, "while the combustion apparatus 103 is operating" refers to that at least one of the combustor 17 and the combustion fan 18 is operating. Therefore, a case where the combustor 17 is not operating but the combustion fan 18 is operating is included in the definition of "while the combustion apparatus 103 is operating".

Next, the controller 102 determines whether the pressure P obtained in step S301 is higher than a fifth pressure value P5 (the first pressure) or lower than a sixth pressure value P6 (the second pressure) which is lower than the fifth pressure value P5, or neither (step S302).

Here, the fifth pressure value P5 may be set in the following manner: for example, a pressure range in the exhaust passage 70 when the exhaust gas discharged from the power generation system 100 flows through the exhaust passage 70 is obtained through an experiment or the like in advance; and then the highest pressure in the pressure range may be set as the fifth pressure value P5. The pressure range detected by the pressure detector 21 varies depending on the shape (e.g., the inner diameter and length) of the exhaust passage 70. Therefore, it is preferred that a pressure range in the exhaust passage 70 in the supply and exhaust mechanism 104 with no damage is measured at the time of installation of the power generation system 100, and the highest pressure in the measured pressure range is set as the fifth pressure value P5.

Similarly, the sixth pressure value P6 may be set in the following manner: for example, the pressure range in the exhaust passage 70 when the exhaust gas discharged from the power generation system 100 flows through the exhaust passage 70 is obtained through an experiment or the like in advance; and then the lowest pressure in the pressure range may be set as the sixth pressure value P6. The pressure range detected by the pressure detector 21 varies depending on the shape (e.g., the inner diameter and length) of the exhaust passage 70. Therefore, it is preferred that the pressure range in the exhaust passage 70 in the supply and exhaust mechanism 104 with no damage is measured at the time of installation of the power generation system 100, and the lowest pressure in the measured pressure range is set as the sixth pressure value P6.

If the pressure P obtained in step S301 is neither lower than the sixth pressure value P6 nor higher than the fifth pressure value P5 (No in step S302), the controller 102 returns to step S301 and repeats step S301 and S302 until the pressure P becomes lower than the sixth pressure value P6 or higher than the fifth pressure value P5. On the other hand, if the pressure P obtained in step S301 is lower than the sixth pressure value P6 or higher than the fifth pressure value P5 (Yes in S302), then the controller 102 determines that the exhaust passage 70 is damaged, and proceeds to step S303.

In step S303, the controller 102 stops the operation of the combustion apparatus 103. Accordingly, the discharging of the exhaust gas from the combustion apparatus 103 to the exhaust passage 70 is stopped, and a reverse flow of the exhaust gas from the exhaust passage 70 into the casing 12 is suppressed.

Next, the controller 102 confirms whether the fuel cell system 101 is currently stopped (step S304). If the fuel cell system 101 is operating (No in step S304), the controller 102 stops the operation of the fuel cell system 101 (step S305) and proceeds to step S306, because if the fuel cell system 101 is operating, the exhaust gas discharged from the fuel cell system 101 reversely flows into the casing 12. On the other hand, if the fuel cell system 101 is currently stopped (Yes in step S304), the controller 102 proceeds to step S306.

In step S306, the controller 102 prohibits the start-up of the power generation system 100. Specifically, for example, even in a case where a user of the power generation system 100 has operated a remote controller which is not shown and thereby a start-up request signal has been transmitted to the controller 102, or where a start-up time for the power generation system 100 has arrived, the controller 102 does not allow the power generation system 100 to perform a start-up process, thereby prohibiting the start-up of the power generation system 100. It should be noted that since the start-up of the power generation system 100 is prohibited, of course the start-up of the combustion apparatus 103 is also prohibited.

As described above, in the power generation system 100 according to Embodiment 3, if the damage detector detects damage to the exhaust passage 70, the controller 102 prohibits the power generation system 100 from operating. Accordingly, a reverse flow of the exhaust gas into the casing 12 is suppressed. As a result, a situation where the exhaust gas, which is a high-temperature gas, remains in the casing 12 is suppressed from occurring, and thereby an increase in the internal temperature of the casing 12 is suppressed Therefore, a decrease in the efficiency of accessory devices (such as the controller 102) accommodated in the casing 12 can be suppressed, and the durability of the power generation system 100 can be improved.

In the power generation system 100 according to Embodiment 3, the exhaust passage 70 is disposed inside the building 200. For this reason, if the exhaust passage 70 and the air supply passage 78 become damaged, there is a risk that the exhaust gas from the power generation system 100 flows out within the building 200. However, as described above, in the power generation system 100 according to Embodiment 3, the operation of the power generation system 100 is stopped and the start-up of the power generation system 100 is prohibited, so that the outflow of the exhaust gas within the building 200 is suppressed. In this manner, an increase in the internal temperature of the building 200 can be suppressed.

Meanwhile, if the combustion apparatus 103 does not include a desulfurizer for desulfurizing sulfur compounds contained in, for example, natural gas, then SOₓ is produced when the combustion apparatus 103 performs a combustion operation. Here, when the exhaust passage 70 is damaged, the produced SOₓ flows reversely from the exhaust passage 70 into the casing 12 through the air supply passage 78, and is then supplied to the cathode of the fuel cell 11. In such a case, there is a risk that poisoning of the catalyst in the cathode is accelerated.

Moreover, if the exhaust gas that reversely flows from the combustion apparatus 103 is supplied to the combustor 14b, there is a risk that imperfect combustion occurs and CO is produced in the combustor 14b. Furthermore, if the produced CO flows into the fuel cell 11, there is a risk that the catalyst in the fuel cell 11 degrades and the power generation efficiency of the fuel cell 11 decreases.

However, in the power generation system 100 according to Embodiment 3, the controller 102 prohibits the power generation system 100 from operating as described above. Accordingly, a reverse flow of the exhaust gas (containing CO and SOₓ) from the combustion apparatus 103 into the casing 12 is suppressed, and thereby the supply of CO and SOₓ to the fuel cell 11 can be suppressed.

Therefore, in the power generation system 100 according to Embodiment 3, poisoning of the cathode of the fuel cell 11 and a decrease in the power generation efficiency of the fuel cell 11 can be suppressed, and thereby the durability of the power generation system 100 can be improved.

In the above description of Embodiinent 3, the controller 102 performs control to stop the combustion apparatus 103 and to stop the fuel cell system 101 separately. However, Embodiment 3 is not limited to this. As an alternative, the controller 102 may perform control to stop the combustion apparatus 103 and the fuel cell system 101 at one time as stopping of the power generation system 100 in a manner similar to Embodiment 1 and Embodiment 2 (including their variations).

### [Variation 1]

Next, variations of the power generation system 100 according to Embodiment 3 are described.

A power generation system according to Variation 1 of Embodiment 3 serves as an example where the power generation system further includes: a combustion apparatus disposed outside the casing; and a ventilator configured to ventilate an interior of the casing by discharging air in the interior of the casing to the exhaust passage. The damage detector is configured as a gas concentration detector detecting at least one gas concentration between a carbon monoxide concentration and a carbon dioxide concentration. The controller: stores, as a reference gas concentration, a gas concentration that is obtained by adding a predetermined concentration to a gas concentration detected by the gas concentration detector when the fuel cell system is not generating electric power, the combustor and the combustion apparatus are not performing combustion, and the ventilator is operating; and determines that the exhaust passage is damaged if the gas concentration detector detects a gas concentration that is out of a concentration range of the reference gas concentration.

### [Configuration of Power Generation System]

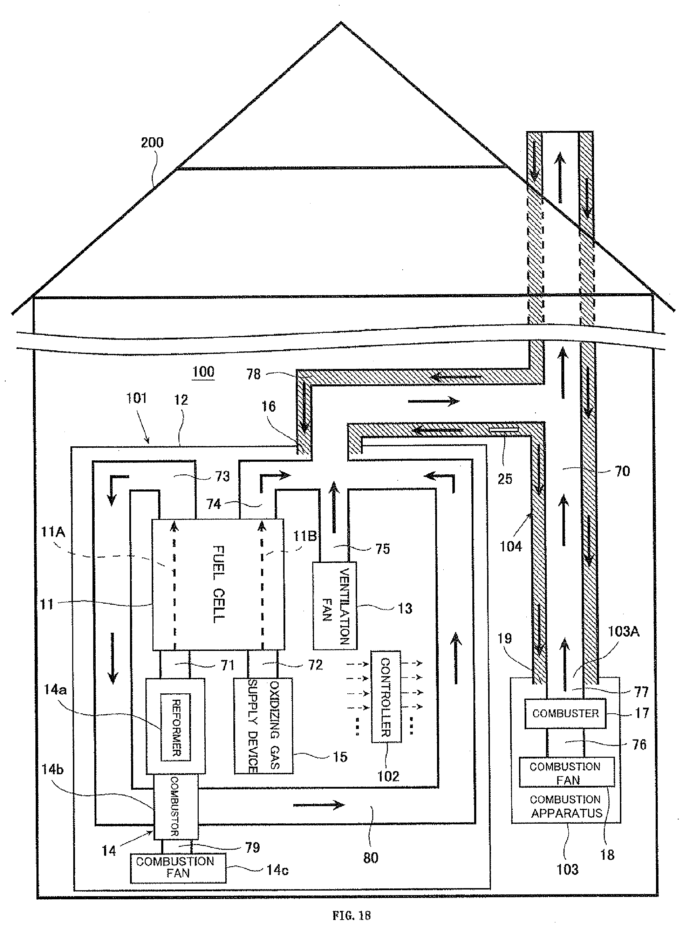

Fig. 18 is a schematic diagram showing a schematic structure of the power generation system according to Variation 1 of Embodiment 3.

As shown in Fig. 18, the fundamental configuration of the power generation system 100 according to Variation 1 is the same as that of the power generation system 100 according to Embodiment 3. However, the power generation system 100 according to Variation 1 is different from the power generation system 100 according to Embodiment 3 in that, in the power generation system 100 according to Variation 1, the carbon monoxide concentration detector (gas concentration detector) 25 instead of the pressure detector 21 is provided at the air supply passage 78. It should be noted that the carbon monoxide concentration detector 25 may be configured in any form, so long as the carbon monoxide concentration detector 25 is configured to detect a carbon monoxide concentration in the air supply passage 78. A device used as the carbon monoxide concentration detector 25 is not particularly limited.

Although in Variation 1 the carbon monoxide concentration detector 25 is disposed in the air supply passage 78, Variation 1 is not limited to this. Alternatively, the detector's sensor part may be disposed inside the air supply passage 78 and the other parts of the detector may be disposed outside the air supply passage 7 8. Further alternatively, the carbon monoxide concentration detector 25 may be disposed in the exhaust passage 70 or in the casing 12.

### [Operation of Power Generation System]

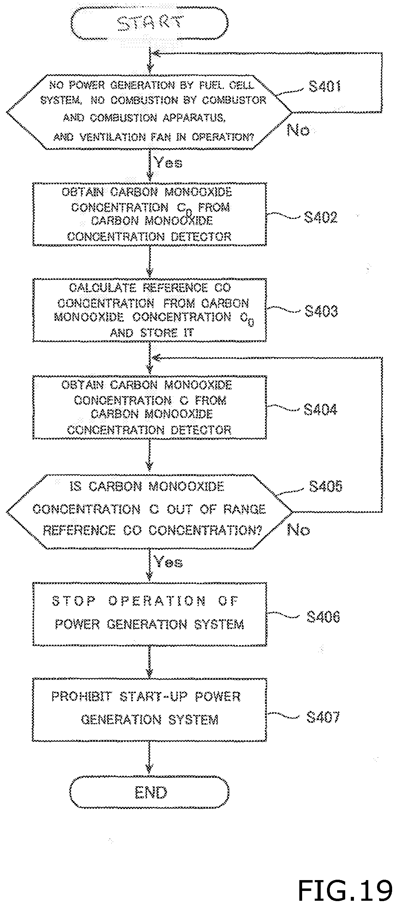

As previously described in Variation 2 of Embodiment 2, carbon monoxide is produced when the exhaust passage 70 is damaged. Therefore, in Variation 1 of Embodiment 3, the controller 102 detects a carbon monoxide concentration (substantially 0) in the air supply passage 78 in a state where no carbon monoxide is being produced; stores, as a reference gas concentration, a value obtained by adding a predetermined concentration to the detected concentration; and the controller 102 determines that the exhaust passage 70 is damaged if the carbon monoxide concentration detector 25 detects a carbon monoxide concentration that is out of the range of the reference gas concentration. Hereinafter, a damage detection operation by means of the carbon monoxide concentration detector 25 is described with reference to Fig. 19.

Fig. 19 is a flowchart schematically showing the damage detection operation of the power generation system according to Variation 1 of Embodiment 3.

As shown in Fig. 19, the controller 102 (to be exact, the damage determiner of the controller 102) determines whether the current state is as follows: the fuel cell system 101 is not generating electric power; the combustor 14b and the combustion apparatus 103 are not performing combustion; and the ventilation fan 13 is operating (step S401). If the fuel cell system 101 is not generating electric power, the combustor 14b and the combustion apparatus 103 are not performing combustion, and the ventilation fan 13 is operating, then the controller 102 proceeds to step S402. In other cases, the controller 102 repeats step S401.

It should be noted that if the fuel cell system 101 is not generating electric power, the combustor 14b and the combustion apparatus 103 are not performing combustion, and the ventilation fan 13 is not operating, then the controller 102 may start the ventilation fan 13 to satisfy the requirements in step S401.

In step S402, the controller 102 obtains a carbon monoxide concentration C₀ from the carbon monoxide concentration detector 25. Next, the controller 102 adds a predetermined concentration to the carbon monoxide concentration C₀ obtained in step S402 to calculate a reference CO concentration (the reference gas concentration), and stores the reference CO concentration in its storage unit which is not shown in Fig. 18 (step S403).

It should be noted that the predetermined concentration varies depending on the carbon monoxide concentration detection accuracy of the carbon monoxide concentration detector to be used. Therefore, it is preferred that the value of the predetermined concentration is set in accordance with the carbon monoxide concentration detector to be used, and that the value is set within a range that does not cause erroneous detection. For example, in a case where the carbon monoxide concentration detector to be used is configured to detect carbon monoxide in a range from several ppm to several hundred ppm, it is preferred that the predetermined concentration is set to be close to the lowest detectable concentration. Alternatively, the predetermined concentration may be 1000 ppm.

Next, the controller 102 obtains a carbon monoxide concentration C from the carbon monoxide concentration detector 25 when, for example, the fuel cell system 101 is generating electric power and/or the combustion apparatus 103 is operating (step S404), and determines whether the obtained carbon monoxide concentration C is out of the range of the reference CO concentration (to be more specific, whether the obtained carbon monoxide concentration C is higher than the reference CO concentration) (step S405).

If the carbon monoxide concentration C obtained in step S404 is within the range of the reference CO concentration (to be more specific, if the carbon monoxide concentration C obtained in step S404 is lower than or equal to the reference CO concentration) (No in step S405), the controller 102 repeats step S404 and step S405 until the carbon monoxide concentration C obtained in step S404 becomes out of the range of the reference CO concentration. On the other hand, if the carbon monoxide concentration C obtained in step S404 is out of the range of the reference CO concentration (Yes in step S405), the controller 102 proceeds to step S406.

In step S406, the controller 102 stops the operation of the power generation system 100. Next, the controller 102 prohibits the start-up of the power generation system 100 (step S407). Specifically, for example, even in a case where a user of the power generation system 100 has operated a remote controller which is not shown and thereby a start-up request signal has been transmitted to the controller 102, or where a start-up time for the power generation system 100 has arrived, the controller 102 does not allow the power generation system 100 to perform a start-up process, thereby prohibiting the start-up of the power generation system 100. It should be noted that since the start-up of the power generation system 100 is prohibited, of course the start-up of the combustion apparatus 103 is also prohibited.

The power generation system 100 according to Variation 1 with the above-described configuration provides the same operational advantages as those of the power generation system 100 according to Embodiment 3.

Although the power generation system 100 according to Variation 1 includes the carbon monoxide concentration detector 25 as a damage detector, Variation 1 is not limited to this. For example, the power generation system 100 according to Variation 1 may include the carbon dioxide concentration detector 26 as a damage detector.

### [Variation 2]

A power generation system according to Variation 2 of Embodiment 3 serves as an example where the power generation system further includes: a combustion apparatus disposed outside the casting; and a ventilator configured to ventilate an interior of the casing by discharging air in the interior of the casing to the exhaust passage. The damage detector is configured as an oxygen concentration detector. The controller: stores, as a reference oxygen concentration, an oxygen concentration that is obtained by subtracting a predetermined concentration from an oxygen concentration detected by the oxygen concentration detector when the fuel cell system is not generating electric power, the combustor and the combustion apparatus are not performing combustion, and the ventilator is operating; and determines that the exhaust passage is damaged if the oxygen concentration detector detects an oxygen concentration that is out of a concentration range of the reference oxygen concentration.

### [Configuration of Power Generation System]

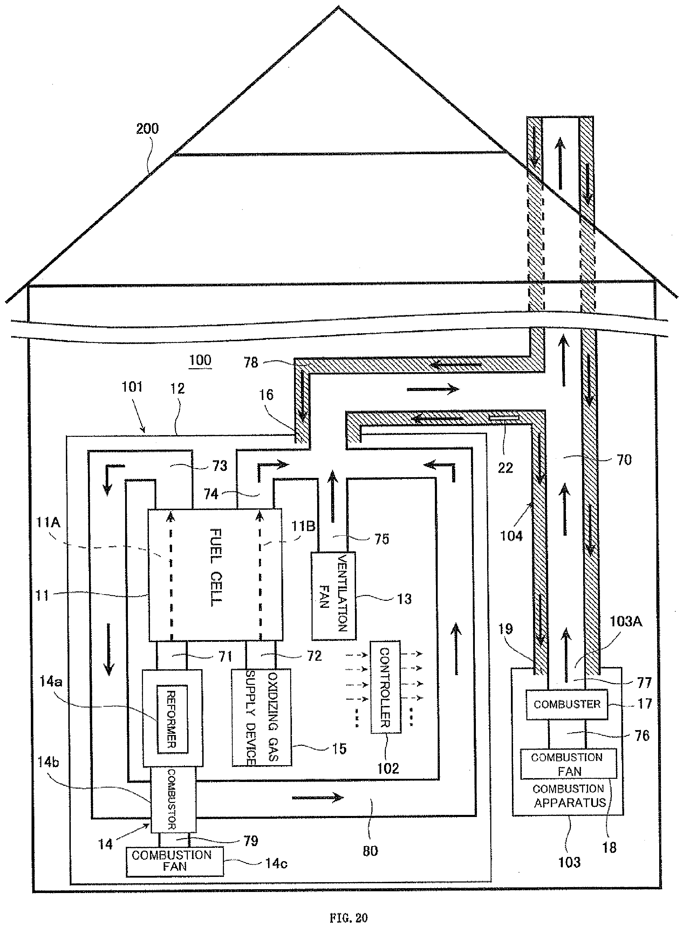

Fig. 20 is a schematic diagram showing a schematic configuration of the power generation system according to Variation 2 of Embodiment 3.

As shown in Fig. 20, the fundamental configuration of the power generation system 100 according to Variation 2 is the same as that of the power generation system 100 according to Embodiment 3. However, the power generation system 100 according to Variation 2 is different from the power generation system 100 according to Embodiment 3 in that, in the power generation system 100 according to Variation 2, the oxygen concentration detector (gas concentration detector) 22 instead of the pressure detector 21 is provided at the air supply passage 78. It should be noted that the oxygen concentration detector 22 may be configured in any form, so long as the oxygen concentration detector 22 is configured to detect an oxygen concentration in the air supply passage 78. A device used as the oxygen concentration detector 22 is not particularly limited.

Although in Variation 2 the oxygen concentration detector 22 is disposed in the air supply passage 78, Variation 2 is not limited to this. Alternatively, the detector's sensor part may be disposed inside the air supply passage 78 and the other parts of the detector may be disposed outside the air supply passage 78. Further alternatively, the oxygen concentration detector 22 may be disposed in the exhaust passage 70 or in the casing 12.

### [Operation of Power Generation System]

As previously described in Variation 1 of Embodiment 2, the oxygen concentration in the exhaust passage 70 changes when the exhaust passage 70 becomes damaged, and the oxygen concentration when the exhaust passage 70 is in such a damaged state consequently becomes out of the oxygen concentration range of the exhaust passage 70 in a non-damaged state.

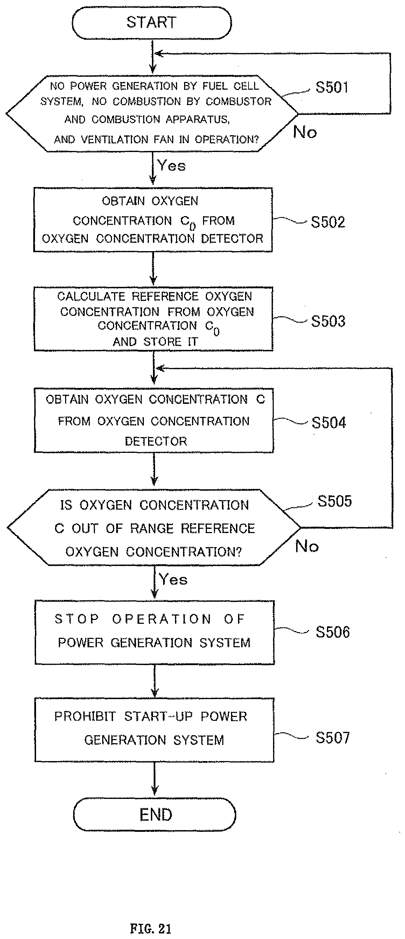

Therefore, in Variation 2, the controller 102 detects an oxygen concentration in the air supply passage 78 when the exhaust passage 70 is in a non-damaged state; stores, as a reference oxygen concentration (the reference gas concentration), a value obtained by subtracting a predetermined concentration from the detected concentration; and the controller 102 determines that the exhaust passage 70 is damaged if the oxygen concentration detector 22 detects an oxygen concentration that is out of the range of the reference oxygen concentration. Hereinafter, a damage detection operation by means of the oxygen concentration detector 22 is described with reference to Fig. 21.

Fig. 21 is a flowchart schematically showing the damage detection operation of the power generation system according to Variation 2 of Embodiment 3.

As shown in Fig. 21, the controller 102 (to be exact, the damage determiner of the controller 102) determines whether the current state is as follows: the fuel cell system 101 is not generating electric power; the combustor 14b and the combustion apparatus 103 are not performing combustion; and the ventilation fan 13 is operating (step S501). If the fuel cell system 101 is not generating electric power, the combustor 14b and the combustion apparatus 103 are not performing combustion, and the ventilation fan 13 is operating, then the controller 102 proceeds to step S502. In other cases, the controller 102 repeats step S501.

It should be noted that if the fuel cell system 101 is not generating electric power, the combustor 14b and the combustion apparatus 103 are not performing combustion, and the ventilation fan 13 is not operating, then the controller 102 may start the ventilation fan 13 to satisfy the requirements it step S501.

In step S502, the controller 102 obtains an oxygen concentration C₀ from the oxygen concentration detector 22. Next, the controller 102 subtracts a predetermined concentration from the oxygen concentration C₀ obtained in step S502 to calculate a reference oxygen concentration (the reference gas concentration), and stores the reference oxygen concentration in its storage unit which is not shown in Fig. 20 (step S503).

It should be noted that the predetermined concentration varies depending on the oxygen concentration detection accuracy of the oxygen concentration detector to be used. Therefore, it is preferred that the value of the predetermined concentration is set in accordance with the oxygen concentration detector to be used, and that the value is set within a range that does not cause erroneous detection. For example, in a case where the accuracy of the oxygen concentration detector is ±0.5 %, then the predetermined concentration may be set to 1 %.

Next, the controller 102 obtains an oxygen concentration C from the oxygen concentration detector 22 when, for example, the fuel cell system 101 is generating electric power and/or the combustion apparatus 103 is operating (step S504), and determines whether the obtained oxygen concentration C is out of the range of the reference oxygen concentration (step S505).

If the oxygen concentration C obtained in step S504 is within the range of the reference oxygen concentration (No in step S505), the controller 102 repeats step S504 and step S505 until the oxygen concentration C obtained in step S504 becomes out of the range of the reference oxygen concentration. On the other hand, if the oxygen concentration C obtained in step S504 is out of the range of the reference oxygen concentration (Yes in step S505), the controller 102 proceeds to step S506.

In step S506, the controller 102 stops the operation of the power generation system 100. Next, the controller 102 prohibits the start-up of the power generation system 100 (step S507). Specifically, for example, even in a case where a user of the power generation system 100 has operated a remote controller which is not shown and thereby a start-up request signal has been transmitted to the controller 102, or where a start-up time for the power generation system 100 has arrived, the controller 102 does not allow the power generation system 100 to perform a start-up process, thereby prohibiting the start-up of the power generation system 100. It should be noted that since the start-up of the power generation system 100 is prohibited, of course the start-up of the combustion apparatus 103 is also prohibited.

The power generation system 100 according to Variation 2 with the above-described configuration provides the same operational advantages as those of the power generation system 100 according to Embodiment 3.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. the structures and/ or functional details may be substantially altered without departing from the scope of the invention as defined in the appended claims.

### Industrial Applicability

The power generation system and its operation method according to the present invention are useful in the field of fuel cells since the system and operation method are capable of suppressing, when the exhaust passage is damaged, an increase in the internal temperature of the casing and a decrease in the efficiency of accessory devices accommodated in the casing.

### Reference Signs List

- 11: fuel cell
- 11A: fuel gas passage
- 11B: oxidizing gas passage
- 12: casing
- 13: ventilation fan
- 14: fuel gas supply device (hydrogen generation apparatus)
- 14a: reformer
- 14b: combustor
- 14c: combustion fan
- 15: oxidizing gas supply device
- 16: air inlet
- 17: combustor
- 18: combustion fan
- 19: air inlet
- 21: pressure detector
- 22: oxygen concentration detector
- 23: temperature detector
- 24: combustible gas detector
- 70: exhaust passage
- 71: fuel gas supply passage
- 72: oxidizing gas supply passage
- 73: off fuel gas passage
- 74: off oxidizing gas passage
- 75: ventilation passage
- 76: combustion air feed passage
- 77: exhaust gas passage
- 78: air supply passage
- 79: air feed passage
- 80: flue gas passage
- 100: power generation system
- 101: fuel cell system
- 102: controller
- 103: combustion apparatus
- 104: supply and exhaust mechanism
- 200: building

## Claims

1. A power generation system comprising a fuel cell system including a fuel cell (11) configured to generate electric power by using a fuel gas and an oxidizing gas, the power generation system further comprising:
a casing (12) accommodating the fuel cell (11);
a supply and exhaust mechanism (104) including an exhaust passage (70) configured to discharge an exhaust gas from the power generation system to outside of the casing (12), and an air supply passage (78) configured to supply air to the power generation system;
a damage detector, disposed in the air supply passage (78) or in the casing (12), configured to detect damage to the exhaust passage (70); and
a controller (102), wherein
the damage detector detects presence of at least one of the following phenomena: a change in pressure; a change in temperature; a change in oxygen concentration, a change in carbon monoxide concentration; and a change in carbon dioxide concentration, and
if the controller (102) detects damage to the exhaust passage (70) based on information obtained from the damage detector, the controller (102) is configured to perform control to stop operation of the power generation system,
wherein the air supply passage (78) is formed in such a manner that the air supply passage (78) is heat exchangeable with the exhaust passage (70), and
the supply and exhaust mechanism (104) is configured as a double pipe in which the exhaust passage (70) is disposed inside the air supply passage (78).

2. The power generation system according to claim 1, wherein
the fuel cell system further includes a hydrogen generation apparatus (14) including: a reformer (14a) configured to generate a hydrogen-containing fuel gas from a raw material and water; and a combustor (14b) configured to heat the reformer (14a).

3. The power generation system according to claim 1 or claim 2, wherein if the controller (102) detects damage to the exhaust passage (70) while the fuel cell system is in operation, the controller (102) is configured to stop the operation of the fuel cell system.

4. The power generation system according to any one of claims 1 to 3, further comprising a combustion apparatus disposed outside the casing (12), wherein
the exhaust passage (70) branches off into at least two passages such that upstream ends thereof are connected to the combustion apparatus and the fuel cell system, respectively.

5. The power generation system according to claim 4, wherein if the controller (102) detects damage to the exhaust passage (70) while the combustion apparatus is in operation, the controller (102) is configured to stop the operation of the combustion apparatus.

6. The power generation system according to any one of claims 1 to 5, wherein
the damage detector is configured as an oxygen concentration detector (22), and
the controller (102) determines that the exhaust passage (70) is damaged in a case where an oxygen concentration detected by the oxygen concentration detector (22) is lower than a preset first oxygen concentration (C1).

7. The power generation system according to any one of claims 1 to 6, wherein
the damage detector is configured as a carbon dioxide concentration detector (26), and
the controller (102) determines that the exhaust passage (70) is damaged in a case where a carbon dioxide concentration detected by the carbon dioxide concentration detector (26) is higher than a preset first carbon dioxide concentration (C1).

8. The power generation system according to any one of claims 1 to 7, wherein
the damage detector is configured as a carbon monoxide concentration detector (25), and
the controller (102) determines that the exhaust passage (70) is damaged if a carbon monoxide concentration detected by the carbon monoxide concentration detector (25) is higher than or equal to a preset first carbon monoxide concentration (C1).

9. The power generation system according to claim 2 or claim 3, further comprising:
a combustion apparatus disposed outside the casing (12); and
a ventilator (13) configured to ventilate an interior of the casing (12) by discharging air in the interior of the casing (12) to the exhaust passage (70), wherein
the damage detector is configured as a gas concentration detector detecting a carbon monoxide concentration or a carbon dioxide concentration, and
the controller (102) is configured to:
store, as a reference gas concentration, a gas concentration that is obtained by adding a predetermined concentration to a gas concentration detected by the gas concentration detector when the fuel cell system is not generating electric power, the combustor and the combustion apparatus are not performing combustion, and the ventilator is operating; and
determine that the exhaust passage (70) is damaged if the gas concentration detector detects a gas concentration that is out of a concentration range of the reference gas concentration.

10. The power generation system according to claim 2 or claim 3, further comprising:
a combustion apparatus disposed outside the casing (12); and
a ventilator (13) configured to ventilate an interior of the casing (12) by discharging air in the interior of the casing to the exhaust passage (70), wherein
the damage detector is configured as an oxygen concentration detector (22), and
the controller (102) is configured to:
store, as a reference oxygen concentration, an oxygen concentration that is obtained by subtracting a predetermined concentration from an oxygen concentration detected by the oxygen concentration detector (22) when the fuel cell system is not generating electric power, the combustor and the combustion apparatus are not performing combustion, and the ventilator is operating; and
determine that the exhaust passage (70) is damaged if the oxygen concentration detector (22) detects an oxygen concentration that is out of a concentration range of the reference oxygen concentration.

11. The power generation system according to any one of claims 1 to 10, wherein
a downstream end of the air supply passage (78) is either connected to an air inlet of the casing (12) or open to an interior of the casing (12), and
the damage detector is provided in the vicinity of the downstream end of the air supply passage (78).

12. The power generation system according to any one of claims 1 to 11, wherein
the damage detector disposed in the casing,
the damage detector is configured as a temperature detector (23), and
the controller (102) determines that the exhaust passage (70) is damaged if a temperature detected by the temperature detector (23) is higher than a preset first temperature (T1) or lower than a second temperature (T2) which is lower than the first temperature (T1).

13. The power generation system according to any one of claims 1 to 12, wherein
the damage detector disposed in the casing,
the damage detector is configured as a pressure detector (21), and
the controller (102) determines that the exhaust passage (70) is damaged if the pressure detector (21) detects a pressure higher than a preset first pressure (P1) or detects a pressure lower than a second pressure (P2) which is lower than the first pressure (P1).

14. The power generation system according to any one of claims 1 to 13, wherein
the controller (102) is configured to perform control to stop the operation of the power generation system and to prohibit start-up of the power generation system.

15. A method of operating a power generation system including a fuel cell system including a fuel cell (11) configured to generate electric power by using a fuel gas and an oxidizing gas, the power generation system further including:
a casing (12) accommodating the fuel cell (11);
a supply and exhaust mechanism (104) including an exhaust passage (70) configured to discharge an exhaust gas from the power generation system to outside of the casing (12), and an air supply passage (78) configured to supply air to the power generation system;
a damage detector, disposed in the air supply passage (78) or in the casing (12), configured to detect damage to the exhaust passage (70); and
a controller (102), wherein
the damage detector detects presence of at least one of the following phenomena: a change in pressure; a change in temperature; a change in oxygen concentration, a change in carbon monoxide concentration; and a change in carbon dioxide concentration, and
if the controller (102) detects damage to the exhaust passage (70) based on information obtained from the damage detector, the controller (102) performs control to stop operation of the power generation system,
wherein the air supply passage (78) is formed in such a manner that the air supply passage (78) is heat exchangeable with the exhaust passage (70), and
the supply and exhaust mechanism (104) is configured as a double pipe in which the exhaust passage (70) is disposed inside the air supply passage (78).

## Patentansprüche

1. Stromerzeugungssystem, umfassend ein Brennstoffzellensystem, das eine Brennstoffzelle (11) einschließt, gestaltet, um elektrische Energie unter Verwendung eines Brenngases und eines oxidierenden Gases zu erzeugen, wobei das Stromerzeugungssystem des Weiteren umfasst:
ein Gehäuse (12), das die Brennstoffzelle (11) beherbergt;
einen Zufuhr- und Auslassmechanismus (104), der einen Auslasskanal (70), gestaltet, um ein Abgas von dem Stromerzeugungssystem an die Außenseite des Gehäuses (12) abzugeben, und einen Luftzufuhrkanal (78) einschließt, gestaltet, um dem Stromerzeugungssystem Luft zuzuführen;
einen Beschädigungsdetektor, angeordnet in dem Luftzufuhrkanal (78) oder in dem Gehäuse (12), gestaltet, um Schäden an dem Auslasskanal (70) zu ermitteln; und
eine Steuerung (102), wobei
der Beschädigungsdetektor das Auftreten von mindestens einem der nachstehenden Phänomene ermittelt: eine Änderung des Drucks; eine Änderung der Temperatur; eine Änderung der Sauerstoffkonzentration, eine Änderung der Kohlenmonoxidkonzentration und eine Änderung der Kohlendioxidkonzentration, und
wenn die Steuerung (102) Schäden an dem Auslasskanal (70) basierend auf Informationen, die sie von dem Beschädigungsdetektor erhält, feststellt, ist die Steuerung (102) gestaltet, eine Steuerung durchzuführen und den Betrieb des Stromerzeugungssystems anzuhalten,
wobei der Luftzufuhrkanal (78) auf solch eine Weise ausgebildet ist, dass der Luftzufuhrkanal (78) zum Wärmeaustausch mit dem Auslasskanal (70) geeignet ist, und
der Zufuhr- und Auslassmechanismus (104) als eine Doppelröhre gestaltet ist, in der der Auslasskanal (70) im Inneren des Luftzufuhrkanals (78) angeordnet ist.

2. Stromerzeugungssystem nach Anspruch 1, wobei
das Brennstoffzellensystem des Weiteren eine Wasserstofferzeugungsvorrichtung (14) einschließt, die die nachstehende Komponenten einschließt: einen Reformer (14a), gestaltet, um ein wasserstoffhaltiges Brenngas aus einem Ausgangsstoff und Wasser zu erzeugen; und einen Verbrenner (14b), gestaltet um den Reformer (14a) zu erhitzen.

3. Stromerzeugungssystem nach Anspruch 1 oder Anspruch 2, wobei, wenn die Steuerung (102) Schäden an dem Auslasskanal (70) feststellt, während das Brennstoffzellensystem in Betrieb ist, die Steuerung (102) gestaltet ist, den Betrieb des Brennstoffzellensystems anzuhalten.

4. Stromerzeugungssystem nach einem der Ansprüche 1 bis 3, das des Weiteren eine Verbrennungsvorrichtung umfasst, die außerhalb des Gehäuses (12) angeordnet ist, wobei
sich der Auslasskanal (70) so in mindestens zwei Kanäle verzweigt, dass die stromaufwärtigen Enden davon mit der Verbrennungsvorrichtung bzw. dem Brennstoffzellensystem verbunden sind.

5. Stromerzeugungssystem nach Anspruch 4, wobei, wenn die Steuerung (102) Schäden in dem Auslasskanal (70) feststellt, während die Verbrennungsvorrichtung in Betrieb ist, die Steuerung (102) so gestaltet ist, den Betrieb der Verbrennungsvorrichtung anzuhalten.

6. Stromerzeugungssystem nach einem der Ansprüche 1 bis 5, wobei
der Beschädigungsdetektor als ein Sauerstoffkonzentrationsdetektor (22) gestaltet ist, und
die Steuerung (102) in einem Fall, in dem eine durch den Sauerstoffkonzentrationsdetektor (22) ermittelte Sauerstoffkonzentration geringer als eine vorgegebene erste Sauerstoffkonzentration (C1) ist, festlegt, dass der Auslasskanal (70) beschädigt ist.

7. Stromerzeugungssystem nach einem der Ansprüche 1 bis 6, wobei
der Beschädigungsdetektor als ein Kohlendioxidkonzentrationsdetektor (26) gestaltet ist, und
die Steuerung (102) in einem Fall, in dem eine durch den Kohlendioxidkonzentrationsdetektor (26) ermittelte Kohlendioxidkonzentration höher als eine vorgegebene erste Kohlendioxidkonzentration (C1) ist, festlegt, dass der Auslasskanal (70) beschädigt ist.

8. Stromerzeugungssystem nach einem der Ansprüche 1 bis 7, wobei
der Beschädigungsdetektor als ein Kohlenmonoxidkonzentrationsdetektor (25) gestaltet ist, und
die Steuerung (102) festlegt, dass der Auslasskanal (70) beschädigt ist, wenn eine durch den Kohlenmonoxidkonzentrationsdetektor (25) ermittelte Kohlenmonoxidkonzentration höher als oder gleich einer vorgegebenen ersten Kohlenmonoxidkonzentration (C1) ist.

9. Stromerzeugungssystem nach Anspruch 2 oder Anspruch 3, des Weiteren umfassend:
eine Verbrennungsvorrichtung, die außerhalb des Gehäuses (12) angeordnet ist; und
einen Ventilator (13), gestaltet, um das Innere des Gehäuses (12) durch die Abgabe von Luft im Inneren des Gehäuses (12) an den Auslasskanal (70) zu entlüften, wobei
der Beschädigungsdetektor als ein Gaskonzentrationsdetektor gestaltet ist, der eine Kohlenmonoxidkonzentration oder eine Kohlendioxidkonzentration ermittelt, und
die Steuerung (102) gestaltet ist, um:
als eine Bezugsgaskonzentration eine Gaskonzentration zu speichern, die durch die Zugabe einer vorgegebenen Konzentration zu einer durch den Gaskonzentrationsdetektor ermittelten Gaskonzentration erhalten wird, wenn das Brennstoffzellensystem keine elektrische Energie erzeugt, der Verbrenner und die Verbrennungsvorrichtung keine Verbrennung durchführen, und der Ventilator betrieben wird; und
festzulegen, dass der Auslasskanal (70) beschädigt ist, wenn der Gaskonzentrationsdetektor eine Gaskonzentration ermittelt, die außerhalb eines Konzentrationsbereichs der Bezugsgaskonzentration liegt.

10. Stromerzeugungssystem nach Anspruch 2 oder Anspruch 3, des Weiteren umfassend:
eine Verbrennungsvorrichtung, die außerhalb des Gehäuses (12) angeordnet ist; und
einen Ventilator (13), gestaltet, um das Innere des Gehäuses (12) durch die Abgabe von Luft im Inneren des Gehäuses (12) an den Auslasskanal (70) zu entlüften, wobei
der Beschädigungsdetektor als ein Sauerstoffkonzentrationsdetektor (22) gestaltet ist, und
die Steuerung (102) gestaltet ist, um:
als eine Bezugssauerstoffkonzentration eine Sauerstoffkonzentration zu speichern, die durch die Wegnahme einer vorgegebenen Konzentration von einer durch den Sauerstoffkonzentrationsdetektor (22) ermittelten Sauerstoffkonzentration erhalten wird, wenn das Brennstoffzellensystem keine elektrische Energie erzeugt, der Verbrenner und die Verbrennungsvorrichtung keine Verbrennung durchführen, und der Ventilator betrieben wird; und
festzulegen, dass der Auslasskanal (70) beschädigt ist, wenn der Sauerstoffkonzentrationsdetektor (22) eine Sauerstoffkonzentration ermittelt, die außerhalb eines Konzentrationsbereichs der Bezugssauerstoffkonzentration liegt.

11. Stromerzeugungssystem nach einem der Ansprüche 1 bis 10, wobei ein stromabwärtiges Ende des Luftzufuhrkanals (78) entweder mit einem Lufteinlass des Gehäuses (12) verbunden ist, oder zum Inneren des Gehäuse (12) offen ist, und
der Beschädigungsdetektor in der Nähe des stromabwärtigen Endes des Luftzufuhrkanals (78) vorgesehen ist.

12. Stromerzeugungssystem nach einem der Ansprüche 1 bis 11, wobei
der Beschädigungsdetektor in dem Gehäuse angeordnet ist,
der Beschädigungsdetektor als ein Temperaturdetektor (23) gestaltet ist, und
die Steuerung (102) festlegt, dass der Auslasskanal (70) beschädigt ist, wenn eine durch den Temperaturdetektor (23) ermittelte Temperatur höher als eine vorgegebene erste Temperatur (T1) oder niedriger als eine zweite Temperatur (T2) ist, die niedriger als die erste Temperatur (T1) ist.

13. Stromerzeugungssystem nach einem der Ansprüche 1 bis 12, wobei
der Beschädigungsdetektor in dem Gehäuse angeordnet ist,
der Beschädigungsdetektor als ein Druckdetektor (21) gestaltet ist, und
die Steuerung (102) festlegt, dass der Auslasskanal (70) beschädigt ist, wenn der Druckdetektor (21) einen Druck ermittelt, der höher als ein vorgegebener erster Druck (P1) ist, oder einen Druck ermittelt, der niedriger als ein zweiter Druck (P2) ist, der niedriger als der erste Druck (P1) ist.

14. Stromerzeugungssystem nach einem der Ansprüche 1 bis 13, wobei
die Steuerung (102) gestaltet ist, eine Steuerung durchzuführen und den Betrieb des Stromerzeugungssystems anzuhalten und eine Inbetriebnahme des Stromerzeugungssystems zu untersagen.

15. Verfahren zum Betreiben eines Stromerzeugungssystems, das ein Brennstoffzellensystem einschließt, das eine Brennstoffzelle (11) einschließt, gestaltet, um elektrische Energie unter Verwendung eines Brenngases und eines oxidierenden Gases zu erzeugen, wobei das Stromerzeugungssystem des Weiteren einschließt:
ein Gehäuse (12), das die Brennstoffzelle (11) beherbergt;
ein Zufuhr- und Auslassmechanismus (104), der einen Auslasskanal (70), gestaltet, um ein Abgas von dem Stromerzeugungssystem an die Außenseite des Gehäuses (12) abzugeben, und einen Luftzufuhrkanal (78) einschließt, gestaltet, um dem Stromerzeugungssystem Luft zuzuführen;
einen Beschädigungsdetektor, angeordnet in dem Luftzufuhrkanal (78) oder in dem Gehäuse (12), gestaltet, um Schäden an dem Auslasskanal (70) zu ermitteln; und
eine Steuerung (102), wobei
der Beschädigungsdetektor das Auftreten von mindestens einem der nachstehenden Phänomene ermittelt: eine Änderung des Drucks; eine Änderung der Temperatur; eine Änderung der Sauerstoffkonzentration, eine Änderung der Kohlenmonoxidkonzentration und eine Änderung der Kohlendioxidkonzentration, und
wenn die Steuerung (102) Schäden an dem Auslasskanal (70) basierend auf Informationen, die sie von dem Beschädigungsdetektor erhält, feststellt, führt die Steuerung (102) eine Steuerung durch und hält den Betrieb des Stromerzeugungssystems an,
wobei der Luftzufuhrkanal (78) auf solch eine Weise ausgebildet ist, dass der Luftzufuhrkanal (78) zum Wärmeaustausch mit dem Auslasskanal (70) geeignet ist, und
der Zufuhr- und Auslassmechanismus (104) als eine Doppelröhre gestaltet ist, in der der Auslasskanal (70) im Inneren des Luftzufuhrkanals (78) angeordnet ist.

## Revendications

1. Système de génération d'énergie comprenant un système de pile à combustible incluant une pile à combustible (11) configurée pour générer de l'énergie électrique en utilisant un gaz combustible et un gaz oxydant, le système de génération d'énergie comprenant, en outre :
un caisson (12) abritant la pile à combustible (11) ;
un mécanisme d'amenée et d'évacuation (104) incluant un passage d'évacuation (70) configuré pour décharger un gaz d'échappement du système de génération d'énergie vers l'extérieur du caisson (12) et un passage d'amenée d'air (78) configuré pour amener de l'air vers le système de génération d'énergie ;
un détecteur de dommage disposé dans le passage d'amenée d'air (78) ou dans le caisson (12), configuré pour détecter un dommage du passage d'évacuation (70) ; et
un contrôleur (102), dans lequel
le détecteur de dommage détecte la présence d'au moins un des phénomènes suivants : une variation de pression, une variation de température, une variation de la concentration en oxygène, une variation de la concentration en monoxyde de carbone et une variation de la concentration en dioxyde de carbone, et
si le contrôleur (102) détecte un dommage du passage d'évacuation (70) sur la base d'informations fournies par le détecteur de dommage, le contrôleur (102) est configuré pour effectuer une commande pour arrêter le fonctionnement du système de génération d'énergie,
dans lequel le passage d'amenée d'air (78) est formé de manière à ce que le passage d'amenée d'air (78) puisse échanger de la chaleur avec le passage d'évacuation (70) et
le mécanisme d'amenée et d'évacuation (104) est configuré en tant que tuyau double dans lequel le passage d'évacuation (70) est disposé à l'intérieur du passage d'amenée d'air (78).

2. Système de génération d'énergie selon la revendication 1, dans lequel
le système de pile à combustible inclut, en outre, un appareil de génération d'hydrogène (14) incluant : un reformeur (14a) configuré pour générer un gaz combustible contenant de l'hydrogène à partir d'une matière première et d'eau ; et une chambre de combustion (14b) configurée pour chauffer le reformeur (14a).

3. Système de génération d'énergie selon la revendication 1 ou la revendication 2, dans lequel, si le contrôleur (102) détecte un dommage du passage d'évacuation (70) pendant le fonctionnement du système de pile à combustible, le contrôleur (102) est configuré pour arrêter le fonctionnement du système de pile à combustible.

4. Système de génération d'énergie selon l'une quelconque des revendications 1 à 3, comprenant, en outre, un appareil de combustion situé à l'extérieur du caisson (12), dans lequel
le passage d'évacuation (70) est ramifié en au moins deux passages de manière à ce que ses extrémités d'amont soient connectées, respectivement, à l'appareil de combustion et au système de pile à combustible.

5. Système de génération d'énergie selon la revendication 4, dans lequel, si le contrôleur (102) détecte un dommage du passage d'évacuation (70) pendant le fonctionnement de l'appareil de combustion, le contrôleur (102) est configuré pour arrêter le fonctionnement de l'appareil de combustion.

6. Système de génération d'énergie selon l'une quelconque des revendications 1 à 5, dans lequel
le détecteur de dommage est configuré en tant que détecteur de concentration d'oxygène (22), et
le contrôleur (102) détermine que le passage d'évacuation (70) est endommagé dans le cas où une concentration en oxygène détectée par le détecteur de concentration d'oxygène (22) est inférieure à une première concentration d'oxygène prédéfinie (C1).

7. Système de génération d'énergie selon l'une quelconque des revendications 1 à 6, dans lequel
le détecteur de dommage est configuré en tant que détecteur de concentration de dioxyde de carbone (26), et
le contrôleur (102) détermine que le passage d'évacuation (70) est endommagé dans le cas où une concentration en dioxyde de carbone détectée par le détecteur de concentration de dioxyde de carbone (26) est supérieure à une première concentration de dioxyde de carbone prédéfinie (C1).

8. Système de génération d'énergie selon l'une quelconque des revendications 1 à 7, dans lequel
le détecteur de dommage est configuré en tant que détecteur de concentration de monoxyde de carbone (25), et
le contrôleur (102) détermine que le passage d'évacuation (70) est endommagé dans le cas où une concentration en monoxyde de carbone détectée par le détecteur de concentration de monoxyde de carbone (25) est supérieure ou égale à une première concentration de monoxyde de carbone prédéfinie (C1).

9. Système de génération d'énergie selon la revendication 2 ou la revendication 3, comprenant, en outre :
un appareil de combustion situé à l'extérieur du caisson (12) ; et
un ventilateur (13) configuré pour ventiler un intérieur du caisson (12) en déchargeant l'air se trouvant à l'intérieur du caisson (12) vers le passage d'évacuation (70), dans lequel
le détecteur de dommage est configuré en tant que détecteur de concentration de gaz détectant une concentration en monoxyde de carbone ou une concentration en dioxyde de carbone, et
le contrôleur (102) est configuré pour :
enregistrer, en tant que concentration de gaz de référence, une concentration de gaz qui est obtenue en ajoutant une concentration prédéterminée à une concentration de gaz détectée par le détecteur de concentration de gaz lorsque le système de pile à combustible ne génère pas d'énergie électrique, que la chambre de combustion et l'appareil de combustion ne réalisent pas de combustion et que le ventilateur fonctionne ; et
déterminer que le passage d'évacuation (70) est endommagé si le détecteur de concentration de gaz détecte une concentration de gaz qui sort de la plage de concentration de la concentration de gaz de référence.

10. Système de génération d'énergie selon la revendication 2 ou la revendication 3, comprenant, en outre :
un appareil de combustion situé à l'extérieur du caisson (12) ; et
un ventilateur (13) configuré pour ventiler un intérieur du caisson (12) en déchargeant l'air se trouvant à l'intérieur du caisson vers le passage d'évacuation (70), dans lequel
le détecteur de dommage est configuré en tant que détecteur de concentration d'oxygène (22), et
le contrôleur (102) est configuré pour :
enregistrer, en tant que concentration d'oxygène de référence, une concentration d'oxygène qui est obtenue en soustrayant une concentration prédéterminée à une concentration d'oxygène détectée par le détecteur de concentration d'oxygène (22) lorsque le système de pile à combustible ne génère pas d'énergie électrique, que la chambre de combustion et l'appareil de combustion ne réalisent pas de combustion et que le ventilateur fonctionne ; et
déterminer que le passage d'évacuation (70) est endommagé si le détecteur de concentration d'oxygène (22) détecte une concentration d'oxygène qui sort de la plage de concentration de la concentration d'oxygène de référence.

11. Système de génération d'énergie selon l'une quelconque des revendications 1 à 10, dans lequel
une extrémité d'aval du passage d'amenée d'air (78) est soit connectée à une entrée d'air du caisson (12), soit ouverte vers un intérieur du caisson (12), et
le détecteur de dommage est situé au voisinage de l'extrémité d'aval du passage d'amenée d'air (78).

12. Système de génération d'énergie selon l'une quelconque des revendications 1 à 11, dans lequel
le détecteur de dommage est situé dans le caisson,
le détecteur de dommage est configuré en tant que détecteur de température (23), et
le contrôleur (102) détermine que le passage d'évacuation (70) est endommagé si une température détectée par le détecteur de température (23) est supérieure à une première température prédéfinie (T1) ou inférieure à une seconde température (T2) qui est inférieure à la première température (T1).

13. Système de génération d'énergie selon l'une quelconque des revendications 1 à 12, dans lequel
le détecteur de dommage est situé dans le caisson,
le détecteur de dommage est configuré en tant que détecteur de pression (21), et
le contrôleur (102) détermine que le passage d'évacuation (70) est endommagé si le détecteur de pression (21) détecte une pression supérieure à une première température prédéfinie (P1) ou détecte une pression inférieure à une seconde pression (P2) qui est inférieure à la première pression (P1).

14. Système de génération d'énergie selon l'une quelconque des revendications 1 à 13, dans lequel
le contrôleur (102) est configuré pour commander l'arrêt du fonctionnement du système de génération d'énergie et pour interdire le démarrage du système de génération d'énergie.

15. Procédé pour faire fonctionner un système de génération d'énergie comprenant un système de pile à combustible incluant une pile à combustible (11) configurée pour générer de l'énergie électrique en utilisant un gaz combustible et un gaz oxydant, le système de génération d'énergie comprenant, en outre :
un caisson (12) abritant la pile à combustible (11) ;
un mécanisme d'amenée et d'évacuation (104) incluant un passage d'évacuation (70) configuré pour décharger un gaz d'échappement du système de génération d'énergie vers l'extérieur du caisson (12) et un passage d'amenée d'air (78) configuré pour amener de l'air vers le système de génération d'énergie ;
un détecteur de dommage disposé dans le passage d'amenée d'air (78) ou dans le caisson (12), configuré pour détecter un dommage du passage d'évacuation (70) ; et
un contrôleur (102), dans lequel
le détecteur de dommage détecte la présence d'au moins un des phénomènes suivants : une variation de pression, une variation de température, une variation de la concentration en oxygène, une variation de la concentration en monoxyde de carbone et une variation de la concentration en dioxyde de carbone, et
si le contrôleur (102) détecte un dommage du passage d'évacuation (70) sur la base d'informations fournies par le détecteur de dommage, le contrôleur (102) effectue une commande pour arrêter le fonctionnement du système de génération d'énergie,
dans lequel le passage d'amenée d'air (78) est formé de manière à ce que le passage d'amenée d'air (78) puisse échanger de la chaleur avec le passage d'évacuation (70) et
le mécanisme d'amenée et d'évacuation (104) est configuré en tant que tuyau double dans lequel le passage d'évacuation (70) est disposé à l'intérieur du passage d'amenée d'air (78).
